(19) Europäisches Patentamt
European Patent Office
Office européen des brevets

(11) **EP 4 709 000 A1**

(12) **EUROPEAN PATENT APPLICATION**
published in accordance with Art. 153(4) EPC

(43) Date of publication:
**11.03.2026 Bulletin 2026/11**

(21) Application number: **23957032.8**

(22) Date of filing: **30.10.2023**

(51) International Patent Classification (IPC):
**H04W 72/0453** $^{(2023.01)}$    **H04W 28/02** $^{(2009.01)}$

(52) Cooperative Patent Classification (CPC):
**H04W 28/02; H04W 72/0453**

(86) International application number:
**PCT/CN2023/127650**

(87) International publication number:
**WO 2025/091150 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **Grassi, Stefano
Bugnion S.p.A.
Viale Lancetti, 17
20158 Milano (IT)**

(54) **METHOD FOR DETERMINING TRANSMISSION POWER, AND TERMINAL DEVICE**

(57)    Provided are a method for determining a transmission power, and a terminal device. The method comprises: a terminal device determining a transmission power of a first PSFCH, wherein the first PSFCH is a PSFCH based on a comb-tooth structure.

1310

The terminal device determines the
transmission power of the first PSFCH

**FIG. 13**

EP 4 709 000 A1

**Description**

TECHNICAL FIELD

The present disclosure relates to the field of communication technologies, and more particularly, to a method for determining a transmission power and a terminal device.

BACKGROUND

The sidelink over unlicensed spectrum (SL-U) system supports an interlace-based physical sidelink feedback channel (PSFCH). How to perform power control for the interlace-based PSFCH is a problem to be solved.

SUMMARY

Embodiments of the present disclosure provide a method for determining a transmission power and a terminal device. Various aspects of the present disclosure are described below.
In a first aspect, there is provided a method for determining a transmission power, including that a terminal device determines a transmission power of a first PSFCH. Here, the first PSFCH is an interlace-based PSFCH.
In a second aspect, there is provided a terminal device, including a determination module configured to determine a transmission power of a first PSFCH. Here, the first PSFCH is an interlace-based PSFCH.
In a third aspect, there is provided a terminal device including a transceiver, a memory and a processor. Here, the memory is configured to store a program. The processor is configured to call the program in the memory and control the transceiver to receive or transmit a signal to cause the terminal device to perform the method in the first aspect.
In a fourth aspect, there is provided an apparatus including a processor for calling a program from a memory to cause the apparatus to perform the method in the first aspect.
In a fifth aspect, there is provided a chip including a processor for calling a program from a memory to enable a device equipped with the chip to perform the method in the first aspect.
In a sixth aspect, there is provided a computer-readable storage medium having stored thereon a program that causes a computer to perform the method in the first aspect.
In a seventh aspect, there is provided a computer program product including a program that causes a computer to perform the method in the first aspect.
In an eighth aspect, there is provided a computer program that causes a computer to perform the method in the first aspect.

BRIEF DESCRIPTION OF THE DRAWINGS

FIG. 1 is an example diagram of system architecture of a wireless communication system to which the embodiments of the present disclosure can be applied.
FIG. 2 is an example diagram illustrating a scenario of sidelink communication within network coverage.
FIG. 3 is an example diagram illustrating a scenario of sidelink communication with partial network coverage.
FIG. 4 is an example diagram illustrating a scenario of sidelink communication outside network coverage.
FIG. 5 is an example diagram illustrating a scenario of sidelink communication based on a central control node.
FIG. 6 is an example diagram of a broadcast-based sidelink communication manner.
FIG. 7 is an example diagram of a unicast-based sidelink communication manner.
FIG. 8 is an example diagram of a multicast-based sidelink communication manner.
FIG. 9A is an example diagram of a slot structure used by a sidelink communication system.
FIG. 9B is another example diagram of a slot structure used by a sidelink communication system.
FIG. 10 is an example diagram of a listen before talk (LBT) procedure.
FIG. 11 is an example diagram illustrating a structure of resource block (RB) sets in an SL-U system.
FIG. 12A is an example diagram of an interlace structure.
FIG. 12B is an example diagram of a channel structure of a PSFCH.
FIG. 12C is another example diagram of a channel structure of a PSFCH.
FIG. 13 is a flowchart of a method for determining a transmission power according to an embodiment of the present disclosure.
FIG. 14 is a structural diagram of a terminal device according to an embodiment of the present disclosure.
FIG. 15 is a structural diagram of an apparatus to which the embodiments of the present disclosure can be applied.

DETAILED DESCRIPTION

## Communication system architecture

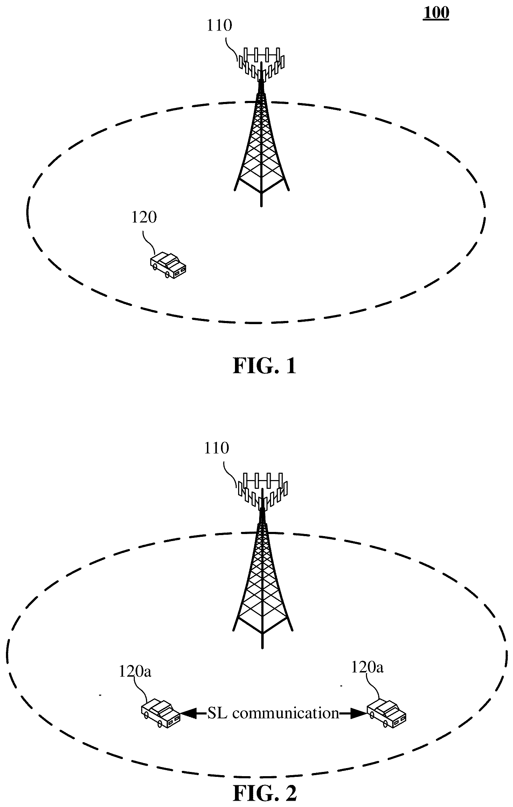

FIG. 1 is an example diagram of a system architecture of a wireless communication system 100 to which the embodiments of the present disclosure can be applied. The wireless communication system 100 may include a network device 110 and a terminal device 120. The network device 110 may be a device that communicates with the terminal device 120. The network device 110 may provide communication coverage for a particular geographic area and may communicate with the terminal device 120 located within the coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located within the network coverage of the network device 110, or may all be located outside the network coverage of the network device 110, or a part of the one more terminal device 120 may be located within the network coverage of the network device 110 and the other part of the one more terminal device 120 may be located outside the network coverage of the network device 110, which is not limited in the embodiments of the present disclosure.

Optionally, the wireless communication system 100 may further include other network entities such as a network controller and a mobility management entity, and the embodiments of the present disclosure are not limited thereto.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD), and the like. The technical solutions provided in the present disclosure can also be applied to future communication systems, such as a sixth generation mobile communication system, a satellite communication system, and the like.

The terminal device in the embodiments of the present disclosure may also be referred to as user equipment (UE), an access terminal, a subscriber unit, a subscriber station, a mobile site, a mobile station (MS), a mobile terminal (MT), a remote station, a remote terminal device, a mobile device, a user terminal, a wireless communication device, a user agent, or a user device. The terminal device in the embodiments of the present disclosure may be a device that provides voice and/or data connectivity to a user, and may be used to connect people, objects, and machines, for example, a handheld device having a wireless connection function, a vehicle-mounted device, or the like. The terminal device in the embodiments of the present disclosure may be a mobile phone, a Pad, a notebook computer, a handheld computer, a mobile internet device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. For example, the terminal device may act as a scheduling entity that provides sidelink (SL) signals between terminal devices in vehicle-to-everything (V2X) or device-to-device (D2D) communication. For example, cellular telephones and automobiles communicate with each other using sidelink signals. Communication between cellular phones and smart home devices occurs without relaying communication signals through base stations. Alternatively, the terminal device may be used to act as a base station.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that connects the terminal device to the wireless network. The base station may broadly cover or be replaced with various names such as a NodeB, an evolved NodeB, a next generation NodeB (gNB), a relay station, an access point, a transmitting and receiving point (TRP), a transmitting point (TP), a master station MeNB, a secondary station SeNB, a multi-standard radio (MSR) node, a home base station, a network controller, an access node, a radio node, an access point, a transmission node, a transceiver node, a base band unit (BBU), a remote radio unit (RRU), an active antenna unit (AAU), a remote radio head (RRH), a central unit (CU), a distributed unit (DU), a location node, and the like. The base station may be a macro base station, a micro base station, a relay node, a donor node, or a combination thereof. The base station may also refer to a communication module, modem, or chip provided within the aforementioned devices or apparatuses. The base station may also be a mobile switching center, a device that assumes the function of a base station in D2D, V2X, or machine-to-machine (M2M) communication, a network-side device in a 6G network, a device that assumes the function of a base station in a future communication system, or the like. The base stations may support networks with the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move based on the location of the mobile base station. In other examples, a helicopter or drone may be configured as a device communicating with another base station.

In some deployments, the network device in the embodiments of the present disclosure may refer to a CU or a DU, or the network device includes a CU and a DU. The gNB may also include an AAU.

Network devices and terminal devices can be deployed on land, including indoor or outdoor, handheld or vehicle-mounted; or can also be deployed on the water; or can also be deployed on aircraft, balloons and satellites in the air/space. In the embodiments of the present disclosure, the scenario in which the network device and the terminal device are located is not limited.

## Sidelink communication under different network coverage scenarios

Sidelink communication refers to a sidelink-based communication technology. Sidelink communication may be, for example, D2D or V2X communication. In conventional cellular systems, communication data is received or transmitted between terminal devices and network devices, while sidelink communication supports direct transmission of communication data between terminal devices and terminal devices. Compared with conventional cellular communication, the direct transmission of communication data between terminal devices and terminal devices can have higher spectral efficiency and lower transmission delay. For example, the internet of vehicles system uses sidelink communication technology.

In the sidelink communication, based on the network coverage in which the terminal device is located, the sidelink communication may be divided into sidelink communication within the network coverage, sidelink communication with partial network coverage, and sidelink communication outside the network coverage.

FIG. 2 is an example diagram illustrating a scenario of sidelink communication within network coverage. In the scenario illustrated in FIG. 2, both terminal devices 120a are within the network coverage of the network device 110. Therefore, both terminal devices 120a may receive the configuration signaling from the network device 110 (the configuration signaling in the present disclosure may also be replaced with configuration information), and determine the sidelink configuration based on the configuration signaling from the network device 110. After the sidelink configuration is performed for both of the terminal devices 120a, the sidelink communication can be performed on the sidelink.

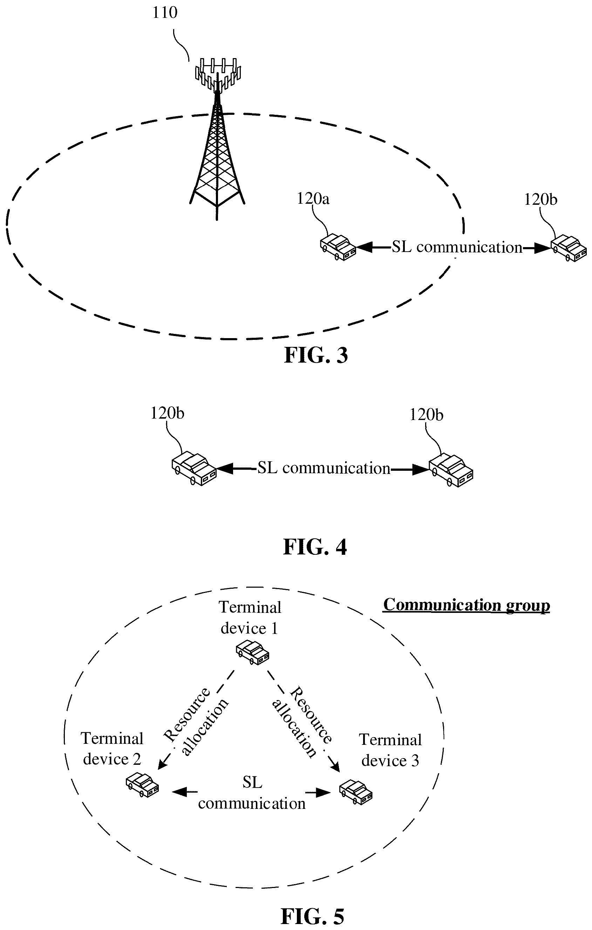

FIG. 3 is an example diagram illustrating a scenario of sidelink communication with partial network coverage. In the scenario illustrated in FIG. 3, the terminal device 120a performs sidelink communication with the terminal device 120b. Since the terminal device 120a is located within the network coverage of the network device 110, the terminal device 120a can receive the configuration signaling from the network device 110 and determine the sidelink configuration based on the configuration signaling from the network device 110. The terminal device 120b is located outside the network coverage and cannot receive the configuration signaling from the network device 110. In this case, the terminal device 120b may determine the sidelink configuration based on pre-configuration information and/or information carried in the physical sidelink broadcast channel (PSBCH) transmitted by the terminal device 120a located within the network coverage. After the sidelink configuration is performed for both of the terminal device 120a and the terminal device 120b, the sidelink communication can be performed on the sidelink.

FIG. 4 is an example diagram illustrating a scenario of sidelink communication outside network coverage. In the scenario illustrated in FIG. 4, both terminal devices 120b are located outside network coverage. In this case, both of the terminal devices 120b may determine the sidelink configuration based on the pre-configuration information. After the sidelink configuration is performed for both of the terminal devices 120a, the sidelink communication can be performed on the sidelink.

## Sidelink communication based on central control node

FIG. 5 is an example diagram illustrating a scenario of sidelink communication based on a central control node. In this sidelink communication scenario, multiple terminal devices may form a communication group, and the communication group includes a central control node. The central control node may be a terminal device (such as terminal device 1 in FIG. 5) in the communication group, and the terminal device may also be referred to as a cluster header (CH) terminal device. The central control node may be responsible for completing one or more of the following functions: establishment of a communication group, group members joining and leaving the communication group, resources coordination within the communication group, allocation of sidelink transmission resources for other terminal devices, reception of sidelink feedback information from other terminal devices, and resources coordination with other communication groups.

## Sidelink communication modes

Certain standards or protocols, such as the 3rd generation partnership project (3GPP), define two sidelink communication modes: a first mode and a second mode.

In the first mode, resources of the terminal device (the resources mentioned in the present disclosure may also be referred to as transmission resources, such as time-frequency resources) are allocated by the network device. The terminal device may transmit data on the sidelink based on resources allocated by the network device. The network device may allocate resources for a single transmission to the terminal device, or may allocate resources for semi-persistent transmission to the terminal device. The first mode can be applied to a scenario with network device coverage, such as the scenario illustrated in FIG. 2. In the scenario illustrated in FIG. 2, since the terminal device 120a is located within the network coverage of the network device 110, the network device 110 may allocate, for the terminal devices 120a, resources to be used in the sidelink transmission process.

In the second mode, the terminal device may autonomously select one or more resources in a resource pool (RP). Then, the terminal device may perform sidelink transmission based on the selected resources. For example, in the scenario illustrated in FIG. 4, the terminal device 120b is located outside the cell coverage. Therefore, the terminal device 120b may autonomously select resources for sidelink transmission from the pre-configured resource pool. Alternatively, in the scenario illustrated in FIG. 2, the terminal device 120a may also autonomously select one or more resources for sidelink transmission from the resource pool configured by the network device 110.

## Data transmission manners for sidelink communication

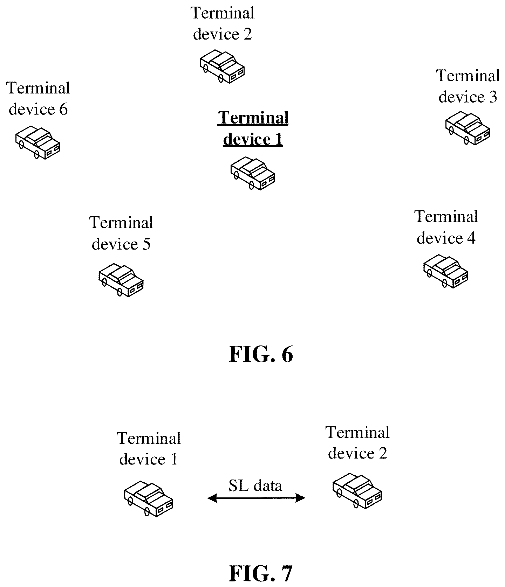

Some sidelink communication systems (such as long term evolution vehicle to everything (LTE-V2X)) support a broadcast-based data transmission manner (hereinafter referred to as broadcast transmission). For broadcast transmission, the receiving terminal may be any terminal device around the transmitting terminal. Taking FIG. 6 as an example, the terminal device 1 is the transmitting terminal, and the receiving terminal corresponding to the transmitting terminal is any terminal device around the terminal device 1, and may be, for example, the terminal device 2 to the terminal device 6 in FIG. 6.

In addition to broadcast transmission, some communication systems support a unicast-based data transmission manner (hereinafter referred to as unicast transmission) and/or a multicast-based data transmission manner (hereinafter referred to as multicast transmission). For example, the new radio vehicle to everything (NR-V2X) is expected to support self-driving, which puts forward higher requirements for data interaction between vehicles. For example, data interaction between vehicles requires higher throughput, lower latency, higher reliability, greater coverage, more flexible resource allocation manners. Therefore, in order to improve the performance of the data interaction between vehicles, NR-V2X introduces unicast transmission and multicast transmission.

For unicast transmission, the receiving terminal generally includes only one terminal device. Taking FIG. 7 as an example, unicast transmission is performed between the terminal device 1 and the terminal device 2. The terminal device 1 may be a transmitting terminal, and the terminal device 2 may be a receiving terminal; or the terminal device 1 may be a receiving terminal, and the terminal device 2 may be a transmitting terminal.

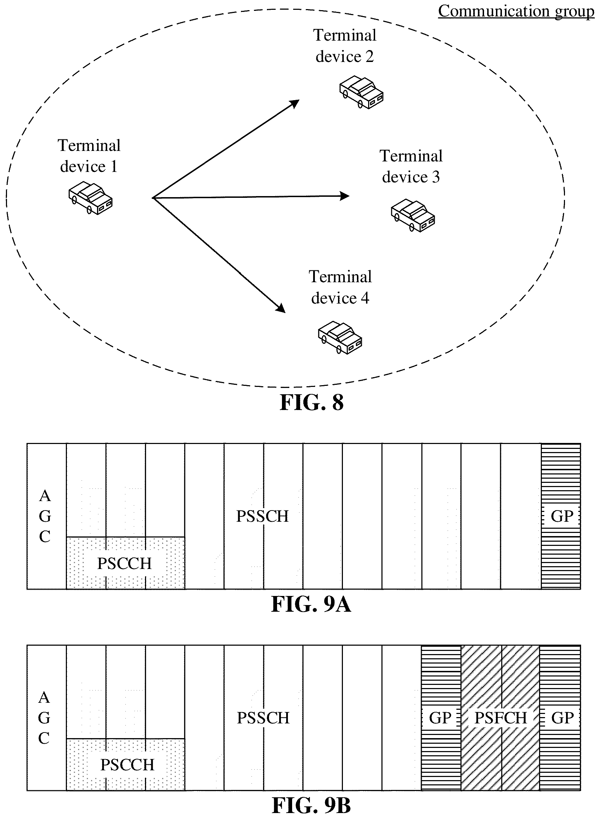

For multicast transmission, the receiving terminal may be a terminal device within a communication group, or the receiving terminal may be a terminal device within a certain transmission distance. Taking FIG. 8 as an example, the terminal device 1, the terminal device 2, the terminal device 3, and the terminal device 4 constitute one communication group. If the terminal device 1 transmits data, other terminal devices (the terminal device 2 to the terminal device 4) in the group may all be receiving terminals.

## Slot structures for sidelink communication

The communication system may define frames, subframes, or slot structures for sidelink communication. Some sidelink communication systems define multiple kinds of slot structures. For example, NR-V2X defines two slot structures. One of the two slot structures excludes a PSFCH, see FIG. 9A; and the other of the two slot structures includes a PSFCH, see FIG. 9B.

The physical sidelink control channel (PSCCH) in NR-V2X may take the second sidelink symbol of the slot as the starting position in the time domain, and the PSCCH may occupy 2 or 3 symbols in the time domain (the symbols mentioned herein may refer to orthogonal frequency division multiplexing (OFDM) symbols). The PSCCH may occupy multiple PRBs in the frequency domain. For example, the number of PRBs occupied by the PSCCH may be selected from the following numerical values: {10, 12, 15, 20, 25}.

In order to reduce the complexity of blind detection of PSCCH by terminal device, usually, only the fixed number of symbols and the fixed number of PRBs are configured for PSCCH in a resource pool. In addition, since NR-V2X uses a sub-channel as the minimum granularity of physical sidelink shared channel (PSSCH) resource allocation, the number of PRBs occupied by the PSCCH must be less than or equal to the number of PRBs included in one sub-channel in the resource pool.

With reference to FIG. 9A, for the slot structure excluding the PSFCH, the PSSCH in NR-V2X may take the second sidelink symbol of the slot as the starting position in the time domain. The last sidelink symbol in the slot is used as a guard period (GP), and the remaining symbols can be mapped to PSSCH. The first sidelink symbol in the slot may be a repetition of the second sidelink symbol. Generally, a terminal device at the receiving end uses the first sidelink symbol as a symbol for automatic gain control (AGC). Therefore, the data on the first sidelink symbol is typically not used for data demodulation. The PSSCH may occupy K sub-channels in the frequency domain, and each sub-channel may include M contiguous PRBs (the values of K and M may be predefined by the protocol, or preconfigured, or configured by the network device, or depend on the terminal device implementation).

FIG. 9B illustrates the slot structure including the PSFCH. FIG. 9B schematically illustrates the positions of symbols occupied by PSFCH, PSCCH, and PSSCH in one slot. The main difference between the slot structure in FIG. 9B and the slot structure in FIG. 9A is that the second-to-last symbol and the third-to-last symbol in the slot are used for transmitting the PSFCH, and the previous symbol of the symbols for transmitting the PSFCH is also used as GP. As can be seen from the slot structure illustrated in FIG. 9B, in one slot, the last symbol is used as GP, the second-to-last symbol is used for PSFCH transmission, the data on the third-to-last symbol is the same as the data on the second-to-last symbol for PSFCH transmission, that is, the third-to-last symbol is used as a symbol for AGC, and the fourth-to-last symbol and the last symbol have the same function and are also used as GP. In addition, the first symbol in the slot is used for the AGC, the data on the first symbol is the same as the data on the second symbol in the slot, the PSCCH occupies 3 symbols, and the remaining symbols can be used for PSSCH transmission.

**Sidelink power control**

The NR SL system supports open loop control for transmission power of PSSCH, PSCCH, PSFCH, and sidelink synchronization signal block (S-SSB). For transmission of PSSCH and PSCCH in the unicast scenario, three power control methods may be supported: a power control method based only on downlink pathloss, a power control method based only on sidelink pathloss, and a power control method based on downlink pathloss and sidelink pathloss. Which power control method is actually to be adopted for PSSCH and PSCCH can be determined by configuration of a higher layer (radio resource control (RRC) layer). For example, if the higher layer only configures a basic operating point $P_{0,SL}$ for the power control based on sidelink pathloss, it means that the power control is performed only based on the sidelink pathloss. If the higher layer only configures a basic operating point $P_{0,D}$ for the power control based on downlink pathloss, it means that the power control is performed only based on the downlink pathloss. If the higher layer configures $P_{0,SL}$ and $P_{0,D}$, it means that the power control is performed based on the downlink pathloss and the sidelink pathloss.

For transmission of PSFCH and S-SSB, and transmission of PSSCH and PSCCH in the multicast and broadcast scenarios, since the terminal device at the transmitting end does not acquire sidelink pathloss information, only the power control based on downlink pathloss is supported.

In the NR SL system, the terminal device is supported to transmit multiples PSFCHs in one time domain symbol, and the maximum transmission power of the terminal device can be equally distributed among multiple PSFCHs. Further, in the NR SL system, the maximum number of PSFCHs that the terminal device is allowed to transmit simultaneously does not exceed the maximum PSFCH transmission number $N_{max,PSFCH}$ configured by the higher layer. The terminal device may determine the number $N_{sch,Tx,PSFCH}$ of PSFCHs to be transmitted in a PSFCH slot or a PSFCH transmission occasion. Further, the terminal device may determine the number $N_{Tx,PSFCH}$ of PSFCHs required to be transmitted simultaneously based on $N_{max,PSFCH}$ and $N_{sch,Tx,PSFCH}$, and determine the transmission power of each PSFCH.

The general principle for the terminal device to determine the transmission power of each PSFCH and the number $N_{Tx,PSFCH}$ of PSFCHs actually transmitted by the terminal device is that the transmission power of each PSFCH is the same and does not exceed $P_{PSFCH,one}$, and the total transmission power of the $N_{Tx,PSFCH}$ PSFCHs does not exceed a configured maximum transmission power $P_{CMAX}$. If the total transmission power of the $N_{Tx,PSFCH}$ PSFCHs exceeds $P_{CMAX}$, the terminal device re-determines the number of PSFCH transmissions based on PSFCH priority. However, the number of PSFCH transmissions determined by the terminal device is not less than a lower limit value, so that the transmission power of each PSFCH is less than or equal to $P_{PSFCH,one}$.

$P_{PSFCH,one}$ can be determined using the following formula:

$$P_{PSFCH,one} = P_{O\_PSFCH} + 10\log_{10}(2^\mu) + \alpha_{PSFCH} \cdot PL_D \quad [dBm].$$

In the above formula, $P_{O\_PSFCH}$ denotes a PSFCH transmission power basic operating point configured by a higher layer for power control based on downlink pathloss. $\alpha_{PSFCH}$ denotes a downlink pathloss compensation factor configured by higher layer signaling. If $\alpha_{PSFCH}$ is not configured by the higher layer, the value of $\alpha_{PSFCH}$ may be 1. $PL_D$ denotes downlink pathloss estimated by the terminal device. The parameter $\mu$ is determined based on a sidelink subcarrier spacing. The relationship between parameter $\mu$ and subcarrier spacing is shown in Table 1 below.

Table 1

| $\mu$ | Subcarrier spacing $\Delta f = 2^\mu \cdot 15$[kHz] |
|---|---|
| 0 | 15 |

(continued)

| μ | Subcarrier spacing $\Delta f = 2^\mu \cdot 15[kHz]$ |
|---|---|
| 1 | 30 |
| 2 | 60 |
| 3 | 120 |

## Unlicensed spectrum and Channel sensing

Unlicensed spectrum is designated by national or regional authorities for communication of radio devices, and the unlicensed spectrum is generally considered to be shared spectrum. That is to say, communication devices in the same or different communication systems can use this spectrum as long as they meet the regulatory requirements set by the national or regional authorities for this spectrum, and there is no need to apply for exclusive spectrum authorization from the government.

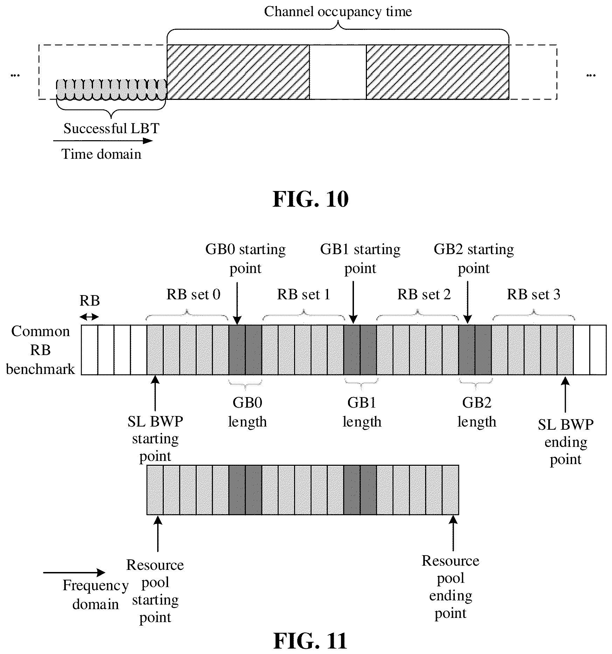

In order to allow various communication devices (or communication systems) that use unlicensed spectrum for wireless communication to coexist harmoniously on this spectrum, some countries or regions stipulate regulatory requirements that need to be met when using unlicensed spectrum. For example, communication devices follow the listen before talk (LBT) principle. The so-called LBT means that a communication device needs to perform a channel sensing procedure or a channel access procedure before transmitting signals on an unlicensed spectrum channel. If a channel sensing result is that the channel is idle, the communication device may use the unlicensed spectrum channel for signal transmission; and if the channel sensing result is that the channel is busy, the communication device is generally not allowed to use the unlicensed spectrum channel for signal transmission. In order to ensure fairness, in one transmission, the time for signal transmission by the communication device using the unlicensed spectrum channel shall not exceed the maximum channel occupancy time (MCOT). FIG. 10 illustrates an example in which a communication device, after successful LBT on the unlicensed spectrum channel, obtains a channel occupancy time and performs signal transmission using resources within the channel occupancy time.

Although channel sensing based on LBT is not a global regulation, channel sensing can bring the benefits of interference avoidance and harmonious coexistence to communication transmission between communication systems on the shared spectrum. Therefore, in the design process of an NR system on unlicensed spectrum, channel sensing is a feature that communication devices in the system must support. From the perspective of system network deployment, channel sensing includes two mechanisms, one is load-based equipment (LBE) LBT, also known as dynamic channel sensing or dynamic channel occupancy; the other is frame-based equipment (FBE) LBT, also known as semi-static channel sensing or semi-static channel occupancy.

The following focuses on several different types of LBT (i.e., several different types of channel access).

Type1 LBT may also be referred to as multi-slot channel detection with random backoff based on contention window size adjustment. In Type1 LBT, the communication device may initiate channel occupancy with a length of $T_{mcot}$ based on the channel access priority p. The following table gives the channel access priority and corresponding parameters when the terminal device performs Type1 LBT.

Table 2: Channel access parameters corresponding to different channel priorities

| Channel access priority (p) | $m_p$ | $CW_{min,p}$ | $CW_{max,p}$ | $T_{mcot,p}$ | Allowed $CW_p$ value |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,255,511, 1023} |
| 4 | 7 | 15 | 1023 | 6 or 10 ms | {15,31,63,127,255,511, 1023} |

In the Table 2, $m_p$ is the number of backoff slots corresponding to the channel access priority p, $CW_p$ is the contention window size corresponding to the channel access priority p, $CW_{min,p}$ is the minimum value of $CW_p$ corresponding to the channel access priority p, $CW_{max,p}$ is the maximum value of $CW_p$ corresponding to the channel access priority p, and $T_{mcot,p}$ is the maximum channel occupancy time corresponding to the channel access priority p. Among the four channel access priorities shown in Table 2, p = 1 is the highest priority.

If the network device uses Type1 LBT, the network device can share a channel occupancy time (COT) with the terminal device in addition to transmitting its own data during the channel occupancy. Accordingly, if the terminal device uses Type1 LBT, the terminal device may share COT with the network device or other terminal devices in addition to transmitting its own data during the channel occupancy. For resource sharing within the COT, channel access may be performed using Type2 LBT. Type2 LBT may also be referred to as channel access based on fixed-length channel listening slots. Type2 LBT includes Type2A LBT, Type2B LBT, and Type2C LBT.

In Type2A LBT, the communication device may perform 25-microsecond ($\mu$s) channel detection. That is, the communication device may initiate channel detection 25 $\mu$s before starting data transmission. The 25 $\mu$s channel detection may include one 16 $\mu$s channel detection and one 9 $\mu$s channel detection. If both detection results indicate that the channel is idle, the channel may be considered idle and channel access may be performed.

In Type2B LBT, the communication device may perform 16 $\mu$s channel detection. In the channel detection procedure, a channel may be considered to be idle if the communication device detects that there is at least 5 $\mu$s channel idle time within 16 $\mu$s, and that the channel is idle for more than 4 $\mu$s during the last 9 $\mu$s time.

In Type2C LBT, the communication device may directly transmit data through the channel without performing channel detection. In Type2C LBT, the time difference between the current transmission and the previous transmission is less than or equal to 16 $\mu$s. That is, if the time difference between the two transmissions is less than or equal to 16 $\mu$s, they can be considered to be the same transmission, and channel detection is not required. It is noted that in Type2C LBT, the transmission duration of the communication device is constrained, and usually does not exceed 584 $\mu$s.

### RB Sets in SL-U System

In the SL-U system, a resource pool may be configured on the unlicensed spectrum (or shared spectrum) through pre-configuration information or configuration information of a network device. This resource pool can be used for sidelink transmission. In some implementations, the resource pool includes M1 RB sets, where one RB set may include M2 RBs, and M1 and M2 are positive integers. In some implementations, one RB set corresponds to one channel on the unlicensed spectrum (or shared spectrum). Alternatively, one RB set corresponds to the minimum frequency domain granularity for LBT. Alternatively, one RB set corresponds to one LBT sub-band.

For example, if the bandwidth corresponding to one channel on the unlicensed spectrum is 20 MHz, the bandwidth corresponding to one RB set is also 20 MHz. Alternatively, the bandwidth of one channel on the unlicensed spectrum is 20 MHz, the 20 MHz corresponds to M3 RBs. The M3 RBs are all RBs included in one channel or all RBs available for data transmission in one channel. For example, M3 = 100 (corresponding to a 15 kHz subcarrier spacing), then one RB set also corresponds to 100 RBs, i.e., M2 = 100.

For another example, on the unlicensed spectrum, it is necessary to determine whether the unlicensed spectrum can be used based on the result of the LBT procedure or the channel access procedure. If the minimum frequency domain granularity for LBT is 20 MHz, one RB set corresponds to the number of RBs included in 20 MHz. Alternatively, one RB set includes M2 = 100 RBs (corresponding to a 15 kHz subcarrier spacing), and the minimum frequency domain granularity for LBT is one RB set, i.e., 100 RBs.

It should be noted that in the embodiments of the present disclosure, the RB set may also be referred to as a channel or an LBT sub-band, and the embodiments of the present disclosure does not limit this.

In some embodiments, a guard band may be configured between two adjacent RB sets, and the guard band may also be referred to as an intra-cell guard band. RBs included in one RB set exclude RBs within the guard band.

In some implementations, the M1 RB sets included in the resource pool are M1 contiguous RB sets.

In some implementations, the frequency domain starting position of the resource pool is the same as the frequency domain starting position of the first RB set among the M1 RB sets. The first RB set mentioned here is an RB set having the lowest frequency domain position among the M1 RB sets.

In some implementations, the frequency domain ending position of the resource pool is the same as the frequency domain ending position of the second RB set among the M1 RB sets. The second RB set mentioned here is the RB set having the highest frequency domain position among the M1 RB sets.

For example, the resource pool includes M1 = 3 RB sets. The three RB sets are RB set 0, RB set 1, and RB set 2, respectively. RB set 0 has the lowest frequency domain position, and RB set 2 has the highest frequency domain position. In this case, the frequency domain starting position of the resource pool may be the same as the frequency domain starting position of the RB set 0, or the frequency domain starting position of the resource pool may be determined based on the frequency domain starting position of the RB set 0. The frequency domain ending position of the resource pool may be the same as the frequency domain ending position of the RB set 2, or the frequency domain ending position of the resource pool may be determined based on the frequency domain ending position of the RB set 2.

In some implementations, a guard band (GB) is included between two adjacent RB sets among the M1 RB sets included in the resource pool. The guard band may also be referred to as an intra-cell guard band.

In some implementations, the frequency domain starting position and the frequency domain size of the guard band may be determined based on pre-configuration information or configuration information of a network device. For example, the terminal device may acquire pre-configuration information or configuration information of a network device, where the pre-configuration information or the configuration information of the network device is used to configure the guard band. In some implementations, the guard band is used to separate RB sets.

For example, as illustrated in FIG. 11, three guard bands are configured in a sidelink bandwidth part (BWP), corresponding to guard band 0, guard band 1, and guard band 2, respectively. As can be seen from FIG. 11, the three guard bands separate four RB sets. Based on the frequency domain starting position of the sidelink BWP (i.e., the starting point of the sidelink BWP illustrated in FIG. 11) as well as the frequency domain starting position of each guard band (i.e., the starting point of the guard band illustrated in FIG. 11) and the frequency domain size of the guard band (i.e., the length of the guard band illustrated in FIG. 11), the frequency domain starting position and the frequency domain ending position of each RB set may be determined. A sidelink resource pool is configured in the sidelink BWP, and the sidelink resource pool includes three RB sets, that is, RB set 0 to RB set 2. Therefore, the frequency domain starting position of the resource pool (that is, the starting point of the resource pool illustrated in FIG. 11) corresponds to the frequency domain starting position of RB set 0, and the frequency domain ending position of the resource pool (that is, the ending point of the resource pool illustrated in FIG. 11) corresponds to the frequency domain ending position of RB set 2.

## Interlace structure in SL-U system

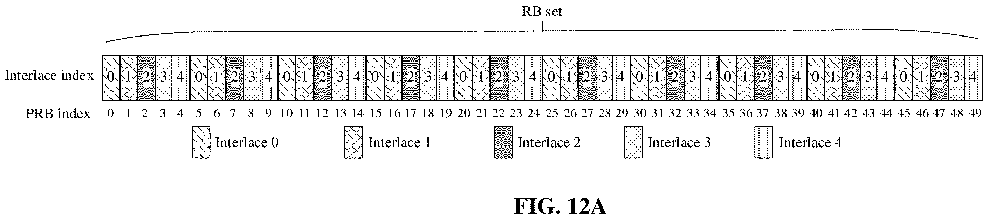

Communication over unlicensed bands usually needs to meet the corresponding regulatory requirements. For example, if the terminal device intends to communicate using an unlicensed band, the frequency band occupied by the terminal device needs to be greater than or equal to 80% of the system bandwidth. Therefore, in order to enable as many terminal devices as possible to access the channel within the same time, an interlace-based resource allocation method is defined in SL-U. Assuming that one interlace includes N discrete PRBs in the frequency domain, and a total of m interlaces are included in the frequency band, then the PRBs included in the m-th interlace are {m, M+m, 2M+m, 3M+m, ...}. As illustrated in FIG. 12A, one RB set includes 50 PRBs with the subcarrier spacing of 30 kHz, the RB set includes 5 interlaces (i.e., M = 5), and the corresponding interlace indexes are interlace 0, interlace 1, interlace 2, interlace 3, and interlace 4, respectively. In this case, each interlace within the RB set may include 10 PRBs (i.e., N = 10), and the frequency domain interval between two adjacent PRBs in one interlace is uniform, i.e. spaced 5 PRBs apart. It is noted that PRBs included in one interlace can also be referred to as interlaced resource blocks (IRBs). The number of interlaces included in one RB set may be related to the subcarrier spacing. For example, for the 15 kHz subcarrier spacing, one RB set may include 10 interlaces; and for the 30 kHz subcarrier spacing, one RB set may include 5 interlaces.

In some implementations, different interlaces within one RB set may include the same number of PRBs or different numbers of PRBs. For example, one RB set includes 5 interlaces, and the corresponding interlace indexes are interlace 0 to interlace 4. Here, each of interlace 0, interlace 1 and interlace 2 includes 10 PRBs, and each of interlace 3 and interlace 4 includes 11 PRBs.

## Interlace-based PSFCH structure in SL-U system

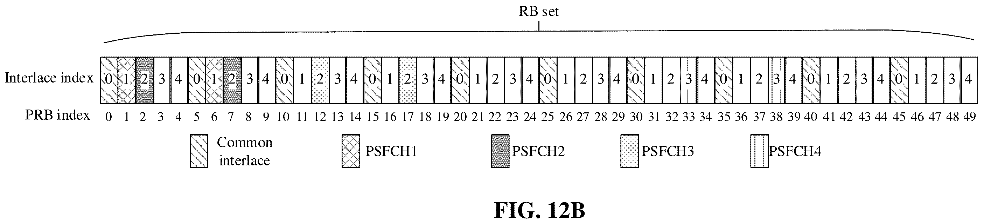

In order to meet the requirements of occupied channel bandwidth (OCB) in regulations, the interlace-based PSFCH channel structure is introduced into the SL-U system. Two interlace-based PSFCH channel structures are supported in the SL-U system. In the first structure, one PSFCH occupies a common interlace and K3 dedicated PRBs in one RB set. The K3 dedicated PRBs are partial PRBs belonging to the same interlace, and the value of K3 includes, for example, {1, 2, 5}. In one RB set, common interlaces corresponding to different PSFCHs may be the same, and K3 dedicated PRBs corresponding to different PSFCHs are usually different. As illustrated in FIG. 12B, the RB set includes five interlaces, corresponding to interlace 0 to interlace 4, respectively, where interlace 0 is a common interlace, and K3 = 2, that is, the transmission resources for one PSFCH include PRBs in the common interlace and two dedicated PRBs. The transmission resources for PSFCH 1 in FIG. 12B include a common interlace (i.e., interlace 0) and the first two PRBs in interlace 1, the transmission resources for PSFCH 2 include a common interlace (i.e., interlace 0) and the first two PRBs in interlace 2, the transmission resources for PSFCH 3 include a common interlace (i.e., interlace 0) and third and fourth PRBs in interlace 2, and the transmission resources for PSFCH 4 include a common interlace (i.e., interlace 0) and seventh and eighth PRBs in interlace 3. In the embodiments of the present disclosure, the K3 PRBs included in the PSFCH transmission resources may be contiguous or non-contiguous, and the present disclosure does not limit this.

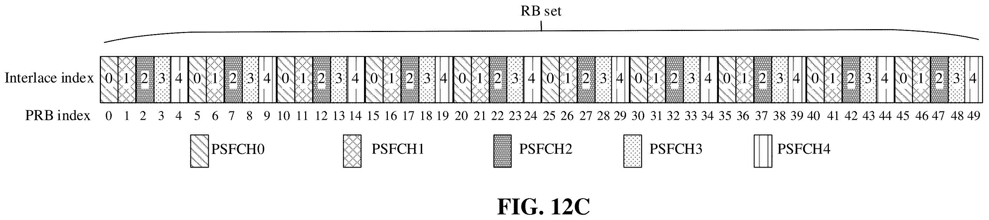

In the second structure, one PSFCH occupies one interlace in one RB set, and different PSFCHs occupy different interlaces in one RB set. As illustrated in FIG. 12C, the RB set includes five interlaces respectively corresponding to interlace 0 to interlace 4, the transmission resources for each PSFCH correspond to one interlace, and the transmission resources for PSFCH0, PSFCH1, PSFCH2, PSFCH3, and PSFCH4 are interlace 0, interlace 1, interlace 2, interlace 3, and interlace 4, respectively.

The foregoing description introduces the method of power control for PSFCH in the NR SL system. In the NR SL system, the PSFCH occupies one PRB in the frequency domain. Therefore, the method of power control for PSFCH in the NR SL system is designed for this kind of PSFCH channel structure (that is, the channel structure in which one PSFCH occupies one PRB). The SL-U system supports interlace-based PSFCHs. For the interlace-based PSFCHs, the number of PRBs occupied by one PSFCH is greater than 1. Therefore, for a PSFCH with an interlace structure, how to determine the transmission power of the PSFCH is a problem to be solved.

In view of the above problems, the embodiments of the present disclosure will be described in detail below.

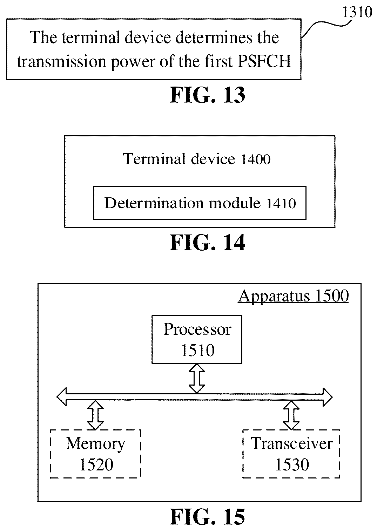

FIG. 13 is a flowchart of a method for determining a transmission power according to an embodiment of the present disclosure. The method of FIG. 13 may be performed by a terminal device. The terminal device may be, for example, the terminal device 120 in FIG. 1.

With reference to FIG. 13, in operation S1310, the terminal device determines a transmission power of a first PSFCH. The first PSFCH is an interlace-based PSFCH.

In some implementations, frequency domain resources or a channel structure of the first PSFCH may include PRBs corresponding to a common interlace and dedicated PRB(s) in one RB set. For convenience of description, this channel structure is hereinafter referred to as a "first structure".

In some implementations, the first PSFCH may include PRBs corresponding to a first interlace in a first RB set. The frequency domain resources of the first PSFCH may include only the PRBs corresponding to the first interlace in the first RB set. Alternatively, the frequency domain resources of the first PSFCH exclude PRBs other than the PRBs corresponding to the first interlace in the first RB set. The first interlace mentioned herein may be a dedicated interlace in one RB set. That is to say, the frequency domain resources of the first PSFCH may include one dedicated interlace in one RB set, and the frequency domain resources of the first PSFCH include all PRBs corresponding to the dedicated interlace in the one RB set. For convenience of description, this channel structure is hereinafter referred to as a "second structure".

It is noted that in the embodiments of the present disclosure, if a guard band is configured between two adjacent RB sets, transmission resources for the PSFCH exclude PRBs within the guard band, or PRBs within the guard band are not used for transmitting the PSFCH.

The first PSFCH may be any PSFCH in one PSFCH transmission occasion. Alternatively, the first PSFCH may be any one of one or more PSFCHs transmitted in one time domain symbol.

The first PSFCH may carry sidelink feedback information or conflict information. The sidelink feedback information may be, for example, hybrid automatic repeat reQuest (HARQ)-acknowledge (ACK) information.

Hereinafter, the methods for determining the transmission power of the first PSFCH will be described in detail with reference to a first embodiment and a second embodiment. In the first embodiment, the channel structure of the first PSFCH is the first structure mentioned above. In the second embodiment, the channel structure of the first PSFCH is the second structure mentioned above.

The first embodiment: the channel structure of the first PSFCH is the first structure

Hereinafter, a method for determining the transmission power of the first PSFCH will be described first with reference to Embodiment 1.1, and then a method for determining the transmission power on one PRB in the first PSFCH will be described with reference to Embodiment 1.2. It should be understood that Embodiment 1.1 and Embodiment 1.2 may be independent of each other or may be combined with each other. For example, the transmission power of the first PSFCH may be determined according to the implementation of Embodiment 1.1, and the transmission power on one PRB in the first PSFCH may be determined according to the implementation of Embodiment 1.2. For another example, the transmission power on one PRB in the first PSFCH may be determined according to the implementation of Embodiment 1.2, but the method for determining the transmission power of the first PSFCH is not limited. For another example, the transmission power of the first PSFCH may be determined according to the implementation of Embodiment 1.1, but the method for determining the transmission power on one PRB in the first PSFCH is not limited.

Embodiment 1.1: determination of the transmission power of the first PSFCH

In some implementations, the transmission power of the first PSFCH may be determined based on the number of dedicated PRBs included in one PSFCH. By determining the transmission power of the first PSFCH based on the number of dedicated PRBs included in one PSFCH, this method for determining the transmission power of the first PSFCH can match the channel structure of the first PSFCH, so that the determined transmission power of the first PSFCH is more accurate.

In some implementations, the transmission power of the first PSFCH may be determined based on the number of PRBs in a common interlace included in one PSFCH. By determining the transmission power of the first PSFCH based on the number of PRBs in the common interlace included in one PSFCH, this method for determining the transmission power of the first PSFCH can match the channel structure of the first PSFCH, so that the determined transmission power of the first PSFCH is more accurate.

In some implementations, the transmission power of the first PSFCH may be determined based on the number of PRBs in a common interlace included in one PSFCH and the number of dedicated PRBs included in the one PSFCH. By determining the transmission power of the first PSFCH based on the number of PRBs in the common interlace included in one PSFCH and the number of dedicated PRBs included in the one PSFCH, this method for determining the transmission power of the first PSFCH can match the channel structure of the first PSFCH, so that the determined transmission power of the first PSFCH is more accurate.

In some implementations, the transmission power of the first PSFCH is determined based on the number of dedicated PRBs included in one PSFCH, which may include that: the transmission power of the first PSFCH is determined based on a transmission power of a single PSFCH ($P_{PSFCH,one}$), and the transmission power of the single PSFCH is determined based on the number of dedicated PRBs included in one PSFCH.

In some implementations, the transmission power of the single PSFCH may be determined based on one or more of: the number K3 of dedicated PRBs included in one PSFCH; a parameter for power control based on downlink pathloss; a downlink pathloss (PL); or a parameter $\mu$ determined based on a subcarrier spacing.

In some implementations, the number K3 of dedicated PRBs included in one PSFCH may be determined based on protocol-predefined information, pre-configuration information, configuration information of a network device, or indication information of the terminal device.

In some implementations, the parameter for the power control based on downlink pathloss may include a P0 value for the power control based on downlink pathloss. This parameter may be denoted by $P_{O,PSFCH}$. $P_{O,PSFCH}$ may be determined based on the parameter dl-P0-PSFCH configured by the higher layer.

In some implementations, the parameter for the power control based on downlink pathloss may include an $\alpha$ value for the power control based on downlink pathloss. This parameter may be denoted by $\alpha_{PSFCH}$. $\alpha_{PSFCH}$ may also be referred to as a downlink pathloss compensation factor. $\alpha_{PSFCH}$ may be determined based on the parameter dl-Alpha-PSFCH configured by the higher layer. If this parameter is not configured by the higher layer, the value of $\alpha_{PSFCH}$ may be 1.

In some implementations, the downlink pathloss (PL) may be determined based on measurement of the terminal device.

In some implementations, the value of the parameter $\mu$ determined based on the subcarrier spacing may be determined based on the subcarrier spacing. The correspondence between $\mu$ and subcarrier spacing can be seen in Table 1 above.

Exemplarily, the transmission power of the single PSFCH may be determined based on (or may satisfy) the following formula:

$$P_{PSFCH,one} = P_{O,PSFCH} + 10\log_{10}(2^{\mu} \cdot K3) + \alpha_{PSFCH} \cdot PL.$$

Embodiment 1.2: determination of the transmission power of the first PRB

Embodiment 1.1 describes the method for determining the transmission power of the first PSFCH in detail. Since the first PSFCH may include PRBs in the common interlace and K3 dedicated PRBs, and in Embodiment 1.1, the transmission power of the first PSFCH is determined only based on the K3 dedicated PRBs, it is also necessary to determine the transmission power of each PRB included in transmission resources for the first PSFCH. Embodiment 1.2 describes the methods for determining the transmission power of the first PRB (which may be any PRB in the transmission resources for the first PSFCH) in detail. It should be understood that the first PRB referred to herein may be one of the PRBs in the common interlace occupied by the first PSFCH, or may be one of the dedicated PRBs occupied by the first PSFCH.

In some implementations, the transmission power of the first PRB may be determined based on one or more of: the transmission power ($P_{PSFCH,one}$) of the single PSFCH; the number of $N_{Tx,PSFCH}$ PSFCHs selected by the terminal device; a transmission power of one PSFCH; the number of dedicated PRBs included in one PSFCH; the number (the total number) of PRBs in common interlace(s) corresponding to the $N_{Tx,PSFCH}$ PSFCHs; an association relationship between a transmission power on one PRB in the common interlace and a transmission power on one dedicated PRB; or a minimum value of the transmission power on the one PRB.

Parameters or factors that can be considered when determining the transmission power of the first PRB will be described in detail below.

**Factor 1: the transmission power of the single PSFCH**

In some implementations, the transmission power of the single PSFCH may be determined based on one or more of: the number K3 of dedicated PRBs included in one PSFCH; a parameter for power control based on downlink pathloss; a downlink pathloss (PL); or a parameter $\mu$ determined based on a subcarrier spacing.

In some implementations, the number K3 of dedicated PRBs included in the one PSFCH may be determined based on protocol-predefined information, pre-configuration information, configuration information of a network device, or indication information of the terminal device.

In some implementations, the parameter for the power control based on downlink pathloss may include a P0 value for the power control based on downlink pathloss. This parameter may be denoted by $P_{O,PSFCH}$. $P_{O,PSFCH}$ may be determined based on the parameter dl-P0-PSFCH configured by the higher layer.

In some implementations, the parameter for the power control based on downlink pathloss may include an $\alpha$ value for the power control based on downlink pathloss. This parameter may be denoted by $\alpha_{PSFCH}$. $\alpha_{PSFCH}$ may also be referred to as a downlink pathloss compensation factor. $\alpha_{PSFCH}$ may be determined based on the parameter dl-Alpha-PSFCH configured by the higher layer. If this parameter is not configured by the higher layer, the value of $\alpha_{PSFCH}$ may be 1.

In some implementations, the downlink pathloss (PL) may be determined based on measurement of the terminal device.

In some implementations, the value of the parameter $\mu$ determined based on the subcarrier spacing may be determined based on the subcarrier spacing. The correspondence between $\mu$ and subcarrier spacing can be seen in Table 1 above.

Exemplarily, the transmission power of the single PSFCH may be determined based on (or may satisfy) the following formula:

$$P_{PSFCH,one} = P_{O,PSFCH} + 10 \log_{10}(2^\mu \cdot K3) + \alpha_{PSFCH} \cdot PL.$$

Here, the meaning of each parameter is the same as that of Embodiment 1.1, and will not be repeated here.

**Factor 2: the number of $N_{Tx,PSFCH}$ PSFCHs selected by the terminal device**

In the time domain symbol corresponding to the PSFCH transmission resources or the PSFCH transmission occasion, there are multiple PSFCHs to be transmitted, and the terminal needs to select, from the multiple PSFCHs to be transmitted, $N_{Tx,PSFCH}$ PSFCHs for transmission. The embodiments of the present disclosure do not specifically limit the manner in which the terminal device selects the $N_{Tx,PSFCH}$ PSFCHs. For example, in some implementations, the terminal device may select the $N_{Tx,PSFCH}$ PSFCHs based on one or more of: the transmission power of the single PSFCH; a first maximum transmission power; the number (denoted as $N_{sch,Tx,PSFCH}$) of PSFCHs to be transmitted by the terminal device; a priority corresponding to a PSFCH; or the number of dedicated PRBs included in transmission resources for one PSFCH.

The first maximum transmission power may be determined based on a configured maximum output power. The configured maximum output power may be determined based on pre-configuration information and/or configuration information of a network device. For example, the configured maximum output power may be determined based on the higher layer parameter sl-maxTxPower. For example, the first maximum transmission power is denoted by $P_{CMAX}$, in units of dBm.

A specific example in which the terminal device selects the $N_{Tx,PSFCH}$ PSFCHs is given below.

For example, the terminal device may determine the transmission power of the single PSFCH based on the number of dedicated PRBs included in one PSFCH, and select the $N_{Tx,PSFCH}$ PSFCHs. For the PSFCH transmission k in the PSFCH transmission occasion i, $1 \le k \le N_{Tx,PSFCH}$, the PSFCHs may be selected in the following manner.

First, if the terminal device is configured with the parameter dl-PO-PSFCH, the transmission power of the single PSFCH is determined based on the following formula:

$$P_{PSFCH,one} = P_{O,PSFCH} + 10 \log_{10}(2^\mu \cdot K3) + \alpha_{PSFCH} \cdot PL \quad [dBm].$$

Here, K3 denotes the number of dedicated PRBs included in the transmission resources for one PSFCH, and the meanings of the remaining parameters are the same as those in Embodiment 1.1, and will not be repeatedly described here.

After determining $P_{PSFCH,one}$, the subsequent operations can be determined in different cases, and $N_{Tx,PSFCH}$ determined in different cases may be different.

Case 1: if $N_{sch,Tx,PSFCH} \le N_{max,PSFCH}$
Case 1-1: if $P_{PSFCH,one} + 10\log_{10}(N_{sch,Tx,PSFCH}) \le P_{CMAX}$

In Case 1-1, $N_{Tx,PSFCH} = N_{sch,Tx,PSFCH}$; $P_{PSFCH,k}(i) = P_{PSFCH,one}$ [dBm].
Case 1-2: if $P_{PSFCH,one} + 10\log_{10}(N_{sch,Tx,PSFCH}) > P_{CMAX}$

Here, $P_{CMAX}$ denotes the first maximum transmission power or is determined based on the first maximum transmission power.

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \ge \max\left(1, \sum_{i=1}^{K} M_i\right)$. For the PSFCHs carrying HARQ-ACK information, $M_i (1 \le i$

$\leq 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX} \text{ , otherwise K = 0.}$$

In Case 1-2, $P_{PSFCH,k}(i) = \min(P_{CMAX} - 10\log_{10}(N_{Tx,PSFCH}), P_{PSFCH,one})$ [dBm].

Case 2: if $N_{sch,Tx,PSFCH} > N_{max,PSFCH}$

In Case 2, the terminal device autonomously determines the $N_{max,PSFCH}$ PSFCHs with ascending order of priority values.

Case 2-1: if $P_{PSFCH,one} + 10\log_{10}(N_{max,PSFCH}) \leq P_{CMAX}$

In Case 2-1, $N_{TX,PSFCH} = N_{max,PSFCH}$; $P_{PSFCH,k}(i) = P_{PSFCH,one}$ [dBm].

Case 2-2: if $P_{PSFCH,one} + 10\log_{10}(N_{max,PSFCH}) > P_{CMAX}$

Here, $P_{CMAX}$ denotes the first maximum transmission power or is determined based on the first maximum transmission power.

In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX} \text{ , otherwise K = 0.}$$

In Case 2-2, $P_{PSFCH,k}(i) = \min(P_{CMAX} - 10\log_{10}(N_{Tx,PSFCH}), P_{PSFCH,one})$ [dBm].

The above description relates to the situation where the terminal device is configured with the parameter dl-PO-PSFCH. If the terminal device is not configured with the parameter dl-PO-PSFCH, the terminal device autonomously selects the $N_{Tx,PSFCH}$ ($N_{Tx,PSFCH} \geq 1$) PSFCHs with ascending order of priority values, and the transmission power of each PSFCH is $P_{PSFCH,k}(i) = P_{CMAX} - 10\log_{10}(N_{Tx,PSFCH})$ [dBm].

**Factor 3: the transmission power of one PSFCH**

In the time domain symbol corresponding to the PSFCH transmission resource or the PSFCH transmission occasion, there are multiple PSFCHs to be transmitted, and the terminal needs to select, from the multiple PSFCHs to be transmitted, $N_{Tx,PSFCH}$ PSFCHs for transmission, and determines the transmission power of each of the selected PSFCHs. The embodiments of the present disclosure do not specifically limit the manner in which the terminal device determines the transmission power of one PSFCH. For example, in some implementations, the terminal device may determine the transmission power of one PSFCH based on one or more of: the number (i.e., $N_{Tx,PSFCH}$) of PSFCHs selected by the terminal device; the transmission power of the single PSFCH; a first maximum transmission power; the number (denoted as $N_{sch,Tx,PSFCH}$) of PSFCHs to be transmitted by the terminal device; a priority corresponding to a PSFCH; or the number of dedicated PRBs included in transmission resources for one PSFCH.

The first maximum transmission power may be determined based on a configured maximum output power. The configured maximum output power may be determined based on pre-configuration information and/or configuration information of a network device. For example, the configured maximum output power may be determined based on the higher layer parameter sl-maxTxPower. For example, the first maximum transmission power is denoted by $P_{CMAX}$, in units of dBm.

A specific example in which the terminal device determines the transmission power of one PSFCH is given below.

For example, the terminal device may determine the transmission power of the single PSFCH based on the number of dedicated PRBs included in one PSFCH, and select the $N_{Tx,PSFCH}$ PSFCHs. For the PSFCH transmission k in the PSFCH transmission occasion i, $1 \leq k \leq N_{Tx,PSFCH}$, the PSFCHs may be selected in the following manner, and the transmission power $P_{PSFCH,k}(i)$ of one PSFCH is determined.

First, if the terminal device is configured with the parameter dl-PO-PSFCH, the transmission power of the single PSFCH is determined based on the following formula:

$$P_{PSFCH,one} = P_{O,PSFCH} + 10\log_{10}(2^{\mu} \cdot K3) + \alpha_{PSFCH} \cdot PL \text{ [dBm].}$$

Here, K3 denotes the number of dedicated PRBs included in the transmission resources for one PSFCH, and the meanings of the remaining parameters are the same as those in Embodiment 1.1, and will not be repeatedly described here.

After determining $P_{PSFCH,one}$, the subsequent operations can be determined in different cases, and $N_{Tx,PSFCH}$ determined in different cases may be different.

Case 1: if $N_{sch,Tx,PSFCH} \leq N_{max,PSFCH}$
Case 1-1: if $P_{PSFCH,one} + 10log_{10}(N_{sch,Tx,PSFCH}) \leq P_{CMAX}$

In Case 1-1, $N_{Tx,PSFCH} = N_{sch,Tx,PSFCH}$; $P_{PSFCH,k}(i) = P_{PSFCH,one}$ [dBm].
Case 1-2: if $P_{PSFCH,one} + 10log_{10}(N_{sch,Tx,PSFCH}) > P_{CMAX}$

Here, $P_{CMAX}$ denotes the first maximum transmission power or is determined based on the first maximum transmission power.

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$$P_{PSFCH,one} + 10log_{10}\left(\max\left(1, \sum_{i=1}^{K} M_i\right)\right) \leq P_{CMAX}$$ , otherwise K = 0.

In Case 1-2, $P_{PSFCH,k}(i) = \min(P_{CMAX} - 10log_{10}(N_{Tx,PSFCH}), P_{PSFCH,one})$ [dBm].
Case 2: if $N_{sch,Tx,PSFCH} > N_{max,PSFCH}$

In Case 2, the terminal device autonomously determines the $N_{max,PSFCH}$ PSFCHs with ascending order of priority values.
Case 2-1: if $P_{PSFCH,one} + 10log_{10}(N_{max,PSFCH}) \leq P_{CMAX}$

In Case 2-1, $N_{TX,PSFCH} = N_{max,PSFCH}$; $P_{PSFCH,k}(i) = P_{PSFCH,one}$ [dBm].
Case 2-2: if $P_{PSFCH,one} + 10log_{10}(N_{max,PSFcH}) > P_{CMAX}$

Here, $P_{CMAX}$ denotes the first maximum transmission power or is determined based on the first maximum transmission power.

In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$$P_{PSFCH,one} + 10log_{10}\left(\max\left(1, \sum_{i=1}^{K} M_i\right)\right) \leq P_{CMAX}$$ , otherwise K = 0.

In Case 2-2, $P_{PSFCH,k}(i) = \min(P_{CMAX} - 10log_{10}(N_{Tx,PSFCH}), P_{PSFCH,one})$ [dBm].

The above description relates to the situation where the terminal device is configured with the parameter dl-PO-PSFCH. If the terminal device is not configured with the parameter dl-PO-PSFCH, the terminal device autonomously selects the $N_{Tx,PSFCH}$ ($N_{Tx,PSFCH} \geq 1$) PSFCHs with ascending order of priority values, and the transmission power of each PSFCH is $P_{PSFCH,k}(i) = P_{CMAX} - 10log_{10}(N_{Tx,PSFCH})$ [dBm].

It is noted that the transmission power $P_{PSFCH,k}(i)$ of each of the $N_{Tx,PSFCH}$ PSFCHs selected by the terminal device is equal, that is, the transmission power of one PSFCH is $P_{PSFCH,k}(i)$.

**Factor 4: association relationship between the transmission power on one PRB in the common interlace and the transmission power on one dedicated PRB**

In some implementations, the association relationship between the transmission power on one PRB in the common interlace and the transmission power on one dedicated PRB includes: a difference between the transmission power on one PRB in the common interlace and the transmission power on one dedicated PRB.

Alternatively, if the difference between the transmission power on one PRB in the common interlace and the transmission power on one dedicated PRB is 0 dB, it may indicate that the transmission power on the PRB in the common interlace and the transmission power on the dedicated PRB are the same.

In some implementations, the association relationship between the transmission power on one PRB in the common interlace and the transmission power on one dedicated PRB includes: a ratio of the transmission power on one PRB in the common interlace to the transmission power on one dedicated PRB.

Alternatively, if the ratio of the transmission power on one PRB in the common interlace to the transmission power on one dedicated PRB is 1, it may indicate that the transmission power on the PRB in the common interlace and the transmission power on the dedicated PRB are the same.

The association relationship between the transmission power on one PRB in the common interlace and the transmission power on one dedicated PRB may be determined autonomously by the terminal device, or may be determined based on pre-configuration information and/or configuration information of a network device.

In some implementations, the pre-configuration information and/or the configuration information of the network device include first indication information, or sidelink BWP configuration information or resource pool configuration information includes first indication information, where the first indication information is used to indicate the association relationship between the transmission power on one PRB in the common interlace and the transmission power on one dedicated PRB. For example, the configuration information of the network device includes the first indication information for indicating the difference between the transmission power on one PRB in the common interlace and the transmission power on one dedicated PRB. The difference may be denoted in decibel values. Exemplarily, the difference indicated by the first indication information is -3 dB, i.e., the first indication information indicates that the transmission power on the PRB in the common interlace is 3 dB lower than the transmission power on the dedicated PRB.

For another example, the configuration information of the network device includes the first indication information for indicating the ratio of the transmission power on one PRB in the common interlace to the transmission power on one dedicated PRB. Exemplarily, the ratio indicated by the first indication information is 0.5, i.e., the first indication information indicates that the transmission power on the PRB in the common interlace is half of the transmission power on the dedicated PRB.

**Factor 5: the number (total number) K1 of PRBs in the common interlace(s) corresponding to the $N_{Tx,PSFCH}$ PSFCHs**

In some implementations, the value of K1 may be determined based on one or more of: the number A of RB sets corresponding to the $N_{Tx,PSFCH}$ PSFCHs; RB set(s) corresponding to the $N_{Tx,PSFCH}$ PSFCHs; index information of the common interlace(s); the number of PRBs included in a common interlace; or, the number of reference PRBs included in one interlace in one RB set.

Optionally, the value of K1 may be determined based on the number A of RB sets corresponding to the $N_{Tx,PSFCH}$ PSFCHs. For example, if a resource pool includes four RB sets, and in one PSFCH transmission occasion, the $N_{Tx,PSFCH}$ PSFCHs selected by the terminal device are located in three RB sets among the four RB sets, the value of A may be 3.

Optionally, the value of K1 may be determined based on RB set(s) (or RB set information, such as index information of RB set(s)) corresponding to the $N_{Tx,PSFCH}$ PSFCHs. For example, a resource pool includes four RB sets, and RB set indexes corresponding to the four RB sets are 0, 1, 2, and 3, respectively. In one PSFCH transmission occasion, the $N_{Tx,PSFCH}$ PSFCHs selected by the terminal device are located in three RB sets among the four RB sets, and RB set indexes corresponding to the three RB sets are 0, 1, and 2, respectively. In this case, the RB sets corresponding to the $N_{Tx,PSFCH}$ PSFCHs are RB set 0, RB set 1, and RB set 2.

Optionally, the value of K1 may be determined based on index information of the common interlace(s). The index information of the common interlace(s) can be determined, for example, based on pre-configuration information and/or configuration information of a network device.

In some implementations, index information of the common interlaces in different RB sets is the same. For example, a resource pool includes four RB sets, and RB set indexes corresponding to the four RB sets are 0, 1, 2, and 3, respectively. The number of interlaces is 5, corresponding to interlace indexes 0, 1, 2, 3 and 4. The index of the common interlace configured by the pre-configuration information and/or the configuration information of the network device is 0, that is, the interlace 0 in each RB set is the common interlace for transmitting the PSFCH. For any RB set, the common interlace included in transmission resources for the PSFCH within the RB set is an interlace having an index of 0.

Optionally, the value of K1 may be determined based on the number of PRBs included in a common interlace in one RB set. For example, a resource pool includes four RB sets, and RB set indexes corresponding to the four RB sets are 0, 1, 2, and 3, respectively. In one PSFCH transmission occasion, the $N_{Tx,PSFCH}$ PSFCHs selected by the terminal device are located in three RB sets, and RB set indexes corresponding to the three RB sets are 0, 1, and 2, respectively. In each RB set, the interlace having the index of 0 is the common interlace. In RB set 0, the number of PRBs included in interlace 0 is 10; in RB set 1, the number of PRBs included in interlace 0 is 11; and in RB set 2, the number of PRBs included in interlace 0 is 10. In this case, the number of PRBs included in the common interlace in one RB set is 10, 11, 10, and thus the value of K1 is the total number of PRBs included in the common interlaces in the three RB sets, that is, K1 = 31.

The number of PRBs included in the common interlace in one RB set may be determined, for example, based on pre-configuration information and/or configuration information of a network device.

For example, the configuration information of the network device includes a parameter a, for indicating the number of PRBs included in one interlace. The number of PRBs included in the common interlace can be determined based on this parameter a.

For another example, the index of the common interlace is determined based on the pre-configuration information and/or the network configuration information. Then, the corresponding interlace in one RB set can be determined based on the index, and the number of PRBs corresponding to this interlace can be further determined.

For another example, based on the pre-configuration information and/or the configuration information of the network device, PRB(s) included in an intra-cell guard band configured between two adjacent RB sets is determined, and PRBs included in each RB set is determined. Based on resource pool configuration information, RB set information included in a resource pool may be determined, and PRBs included in each RB set in the resource pool and the number of PRBs included in each interlace in each RB set may be determined. Since the common interlace is also one of interlaces within the RB set, the number of PRBs corresponding to the common interlace can be determined.

Alternatively, the value of K1 may be determined based on the number (denoted as $M_{RB}^{PSFCH}$ ) of reference PRBs included in one interlace in one RB set. In some implementations, the $M_{RB}^{PSFCH}$ may be determined based on one or more of: protocol-predefined information, pre-configuration information, configuration information of a network device, sidelink BWP configuration information, or resource pool configuration information. For example, the pre-configuration information and/or the configuration information of the network device may include a parameter b, for indicating a value of $M_{RB}^{PSFCH}$.

As one example, the value of K1 may be determined based on (or K1 may satisfy) the following formula:

$$K1 = \sum_{a=1}^{A} K4_{RBset\_a}.$$

Here, A denotes the number of RB sets corresponding to the $N_{Tx,PSFCH}$ PSFCHs, RBset_a denotes the a-th RB set among the A RB sets corresponding to the $N_{Tx,PSFCH}$ PSFCHs, $K4_{RBset\_a}$ denotes the number of PRBs included in the common interlace in the a-th RB set, a is a positive integer, and $1 \le a \le A$.

It should be noted that the number A of RB sets corresponding to the $N_{Tx,PSFCH}$ PSFCHs is determined based on the number of RB sets with different RB set indexes corresponding to the $N_{Tx,PSFCH}$ PSFCHs. For example, $N_{Tx,PSFCH} = 3$, A = 1 if all three PSFCHs are in RB set 0, and K1 = 10 if the common interlace in RB set 0 includes 10 PRBs; A = 3 if the first PSFCH is in RB set 0, the second PSFCH is in RB set 1, and the third PSFCH is in RB set 2, and K1 = 31 if the numbers of PRBs included in the common interlaces in RB set 0, RB set 1, and RB set 2 are 10, 11, and 10, respectively; A = 2 if the first PSFCH and the second PSFCH are in RB set 0 and the third PSFCH is in RB set 2, and K1 = 21 if the numbers of PRBs included in the common interlaces in RB set 0 and RB set 2 are 10 and 11, respectively.

As another example, the value of K1 may be determined based on (or K1 may satisfy) the following formula:

$$K1 = A \cdot M_{RB}^{PSFCH}.$$

Here, A denotes the number of RB sets corresponding to the $N_{Tx,PSFCH}$ PSFCH, and $M_{RB}^{PSFCH}$ denotes the number of reference PRBs included in one interlace in one RB set. The determination method of A in this example is the same as the determination method of A in the previous example, and will not be repeated here. The number of reference PRBs included in one interlace in one RB set is determined based on protocol-predefined information, pre-configuration information, or network configuration information.

**Factor 6: the minimum value of the transmission power on one PRB in the common interlace**

This factor determines the minimum value or the lowest value of the transmission power on one PRB in the common interlace. For example, the minimum transmission power on one PRB may be determined based on protocol-predefined information, pre-configuration information, or network configuration information, and the minimum value of the transmission power on one PRB in the common interlace may be determined based on this information.

Factors that can be considered when determining the transmission power of the first PRB (i.e., one PRB for transmitting the first PSFCH) have been described in detail above. Several possible manners for determining the transmission power of the first PRB are given below.

First manner

The first PRB is a dedicated PRB, and the transmission power of the first PRB may be determined based on (or may satisfy) the following formula:

$$P_{dedicated} = N_{Tx,PSFCH} \cdot P_{one} \cdot \frac{1}{N_{Tx,PSFCH} \cdot K3 + k \cdot K1} \quad [mW] \quad (1).$$

Here, $P_{dedicated}$ denotes the transmission power of the first PRB, expressed as a power value, such as in milliwatts (mW); $P_{one}$ denotes the transmission power of one PSFCH, which is determined based on $P_{PSFCH,k}(i)$ in the above Factor 3, for example, $P_{one}$ is the power value corresponding to $P_{PSFCH,k}(i)$ (expressed in dBm); K1 denotes the number of PRBs in the common interlace(s) corresponding to the $N_{Tx,PSFCH}$ PSFCHs; K3 denotes the number of dedicated PRBs included in one PSFCH; and k is determined based on the ratio of the transmission power on one PRB in the common interlace to the transmission power on one dedicated PRB (e.g., k is equal to the ratio of the transmission power on one PRB in the common interlace to the transmission power on one dedicated PRB).

Further, if the transmission power on each of dedicated PRBs among the $N_{Tx,PSFCH}$ PSFCHs selected by the terminal device is determined in the above manner, the total transmission power of the dedicated PRBs among the $N_{Tx,PSFCH}$ PSFCHs may be determined based on (or may satisfy) the following formula:

$$P_{dedicated\_sum} = N_{Tx,PSFCH} \cdot P_{one} \cdot \frac{N_{Tx,PSFCH} \cdot K3}{N_{Tx,PSFCH} \cdot K3 + k \cdot K1} \quad [mW] \quad (2).$$

Second manner

The first PRB is a dedicated PRB, and the transmission power of the first PRB may be determined based on (or may satisfy) the following formula:

$$P_{dedicated\_dB} = P_{one\_dB} + 10\log_{10}(N_{Tx,PSFCH}) + 10\log_{10}(\frac{1}{N_{Tx,PSFCH} \cdot K3 + k \cdot K1}) \quad [dBm] \quad (3).$$

Here, $P_{dedicated\_dB}$ is the transmission power of the first PRB expressed in decibels; $P_{one\_dB}$ is the transmission power of one PSFCH expressed in decibels, and $P_{one\_dB}$ is determined based on $P_{PSFCH,k}(i)$ in the above Factor 3, such as $P_{one\_dB} = P_{PSFCH,k}(i)$; K1 denotes the number of PRBs in the common interlace(s) corresponding to the $N_{Tx,PSFCH}$ PSFCHs; K3 denotes the number of dedicated PRBs included in one PSFCH; and k is determined based on the ratio of the transmission power on one PRB in the common interlace to the transmission power on one dedicated PRB (e.g., k is equal to the ratio of the transmission power on one PRB in the common interlace to the transmission power on one dedicated PRB).

Further, if the transmission power on each of dedicated PRBs among the $N_{Tx,PSFCH}$ PSFCHs selected by the terminal device is determined in the above manner, the total transmission power of the dedicated PRBs among the $N_{Tx,PSFCH}$ PSFCHs may be determined based on (or may satisfy) the following formula:

$$P_{dedicated\_dB\_sum} = P_{one\_dB} + 10\log_{10}(N_{Tx,PSFCH}) + 10\log_{10}(\frac{N_{Tx,PSFCH} \cdot K3}{N_{Tx,PSFCH} \cdot K3 + k \cdot K1}) \quad [dBm] \quad (4).$$

Third manner

The first PRB is a dedicated PRB, and the transmission power of the first PRB may be determined based on (or may satisfy) the following formula:

$$P_{dedicated} = N_{Tx,PSFCH} \cdot P_{one} \cdot \frac{1}{N_{Tx,PSFCH} \cdot K3 + 10^{k/10} \cdot K1} \quad [mW] \quad (5).$$

Here, $P_{dedicated}$ denotes the transmission power of the first PRB, expressed as a power value, such as in milliwatts (mW); $P_{one}$ denotes the transmission power of one PSFCH, which is determined based on $P_{PSFCH,k}(i)$ in the above Factor 3, for example, $P_{one}$ is the power value corresponding to $P_{PSFCH,k}(i)$ (expressed in dBm); K1 denotes the number of PRBs in the common interlace(s) corresponding to the $N_{Tx,PSFCH}$ PSFCHs; K3 denotes the number of dedicated PRBs included in one PSFCH; and k is determined based on the difference between the transmission power on one PRB in the common interlace and the transmission power on one dedicated PRB (e.g., k is equal to the difference between the transmission power on one PRB in the common interlace and the transmission power on one dedicated PRB, expressed in decibels).

Further, if the transmission power on each of dedicated PRBs among the $N_{Tx,PSFCH}$ PSFCHs selected by the terminal device is determined in the above manner, the total transmission power of the dedicated PRBs among the $N_{Tx,PSFCH}$ PSFCHs may be determined based on (or may satisfy) the following formula:

$$P_{dedicated\_sum} = N_{Tx,PSFCH} \cdot P_{one} \cdot \frac{N_{Tx,PSFCH} \cdot K3}{N_{Tx,PSFCH} \cdot K3 + 10^{k/10} \cdot K1} \quad [mW] \quad (6).$$

Fourth manner

The first PRB is a dedicated PRB, and the transmission power of the first PRB may be determined based on (or may satisfy) the following formula:

$$P_{dedicated\_dB} = P_{one\_dB} + 10\log_{10}(N_{Tx,PSFCH}) +$$
$$10\log_{10}(\frac{1}{N_{Tx,PSFCH} \cdot K3 + 10^{k/10} \cdot K1}) \quad [dBm] \quad (7).$$

Here, $P_{dedicated\_dB}$ is the transmission power of the first PRB expressed in decibels; $P_{one\_dB}$ is the transmission power of one PSFCH expressed in decibels, and $P_{one\_dB}$ is determined based on $P_{PSFCH,k}(i)$ in the above Factor 3, such as $P_{one\_dB} = P_{PSFCH,k}(i)$; K1 denotes the number of PRBs in the common interlace(s) corresponding to the $N_{Tx,PSFCH}$ PSFCHs; K3 denotes the number of dedicated PRBs included in one PSFCH; and k is determined based on the difference between the transmission power on one PRB in the common interlace and the transmission power on one dedicated PRB (e.g., k is equal to the difference between the transmission power on one PRB in the common interlace and the transmission power on one dedicated PRB).

Further, if the transmission power on each of dedicated PRBs among the $N_{Tx,PSFCH}$ PSFCHs selected by the terminal device is determined in the above manner, the total transmission power of the dedicated PRBs among the $N_{Tx,PSFCH}$ PSFCHs may be determined based on (or may satisfy) the following formula:

$$P_{dedicated\_dB\_sum} = P_{one\_dB} + 10\log_{10}(N_{Tx,PSFCH}) + 10\log_{10}(\frac{N_{Tx,PSFCH} \cdot K3}{N_{Tx,PSFCH} \cdot K3 + 10^{k/10} \cdot K1}) \, [dBm] \quad (8).$$

Fifth manner

The first PRB is a PRB in the common interlace (or a common PRB), and the transmission power of the first PRB may be determined based on (or may satisfy) the following formula:

$$P_{common} = N_{Tx,PSFCH} \cdot P_{one} \cdot \frac{k}{N_{Tx,PSFCH} \cdot K3 + k \cdot K1} \quad [mW] \quad (9).$$

Here, $P_{common}$ denotes the transmission power of the first PRB, expressed as a power value, such as in milliwatts (mW); $P_{one}$ denotes the transmission power of one PSFCH, which is determined based on $P_{PSFCH,k}(i)$ in the above Factor 3, for example, $P_{one}$ is the power value corresponding to $P_{PSFCH,k}(i)$ (expressed in dBm); K1 denotes the number of PRBs in the common interlace(s) corresponding to the $N_{Tx,PSFCH}$ PSFCHs; K3 denotes the number of dedicated PRBs included in one PSFCH; and k is determined based on the ratio of the transmission power on one PRB in the common interlace to the transmission power on one dedicated PRB (e.g., k may be equal to the ratio of the transmission power on one PRB in the common interlace to the transmission power on one dedicated PRB).

Further, if the transmission power on each of common PRBs among the $N_{Tx,PSFCH}$ PSFCHs selected by the terminal device is determined in the above manner, the total transmission power of the common PRBs among the $N_{Tx,PSFCH}$ PSFCHs may be determined based on (or may satisfy) the following formula:

$$P_{common\_sum} = N_{Tx,PSFCH} \cdot P_{one} \cdot \frac{k \cdot K1}{N_{Tx,PSFCH} \cdot K3 + k \cdot K1} \quad [mW] \quad (10).$$

Sixth manner

The first PRB is a PRB in the common interlace (or a common PRB), and the transmission power of the first PRB may be determined based on (or may satisfy) the following formula:

$$P_{common\_dB} = P_{one\_dB} + 10\log_{10}(N_{Tx,PSFCH}) + 10\log_{10}(\frac{k}{N_{Tx,PSFCH}\cdot K3 + k\cdot K1}) \ [dBm] \quad (11).$$

Here, $P_{common\_dB}$ is the transmission power of the first PRB expressed in decibels; $P_{one\_dB}$ is the transmission power of one PSFCH expressed in decibels, and $P_{one\_dB}$ is determined based on $P_{PSFCH,k}(i)$ in the above Factor 3, such as $P_{one\_dB} = P_{PSFCH,k}(i)$; K1 denotes the number of PRBs in the common interlace(s) corresponding to the $N_{Tx,PSFCH}$ PSFCHs; K3 denotes the number of dedicated PRBs included in one PSFCH; and k is determined based on the ratio of the transmission power on one PRB in the common interlace to the transmission power on one dedicated PRB (e.g., k may be equal to the ratio of the transmission power on one PRB in the common interlace to the transmission power on one dedicated PRB).

Further, if the transmission power on each of common PRBs among the $N_{Tx,PSFCH}$ PSFCHs selected by the terminal device is determined in the above manner, the total transmission power of the common PRBs among the $N_{Tx,PSFCH}$ PSFCHs may be determined based on (or may satisfy) the following formula:

$$P_{common\_dB\_sum} = P_{one\_dB} + 10\log_{10}(N_{Tx,PSFCH}) + 10\log_{10}(\frac{k\cdot K1}{N_{Tx,PSFCH}\cdot K3 + k\cdot K1}) \ [dBm] \quad (12).$$

Seven manner

The first PRB is a PRB in the common interlace (or a common PRB), and the transmission power of the first PRB may be determined based on (or may satisfy) the following formula:

$$P_{common} = k \cdot P_{dedicated} \ [mW] \quad (13).$$

Here, $P_{dedicated}$ denotes the transmission power on the dedicated PRB, which can be determined based on, for example, the First manner; and k is determined based on the ratio of the transmission power on one PRB in the common interlace to the transmission power on one dedicated PRB (e.g., k is equal to the ratio of the transmission power on one PRB in the common interlace to the transmission power on one dedicated PRB).

Eight manner

The first PRB is a PRB in the common interlace (or a common PRB), and the transmission power of the first PRB may be determined based on (or may satisfy) the following formula:

$$P_{common} = N_{Tx,PSFCH} \cdot P_{one} \cdot \frac{10^{k/10}}{N_{Tx,PSFCH}\cdot K3 + 10^{k/10}\cdot K1} \ [mW] \quad (14).$$

Here, $P_{common}$ denotes the transmission power of the first PRB, expressed as a power value, such as in milliwatts (mW).; $P_{one}$ denotes the transmission power of one PSFCH, which is determined based on $P_{PSFCH,k}(i)$ in the above Factor 3, for example, $P_{one}$ is the power value corresponding to $P_{PSFCH,k}(i)$ (expressed in dBm); K1 denotes the number of PRBs in the common interlace(s) corresponding to the $N_{Tx,PSFCH}$ PSFCHs; K3 denotes the number of dedicated PRBs included in one PSFCH; and k is determined based on the difference between the transmission power on one PRB in the common interlace and the transmission power on one dedicated PRB (e.g., k may be equal to the difference between the transmission power on one PRB in the common interlace and the transmission power on one dedicated PRB).

Further, if the transmission power on each of common PRBs among the $N_{Tx,PSFCH}$ PSFCHs selected by the terminal device is determined in the above manner, the total transmission power of the common PRBs among the $N_{Tx,PSFCH}$ PSFCHs may be determined based on (or may satisfy) the following formula:

$$P_{common\_sum} = N_{Tx,PSFCH} \cdot P_{one} \cdot \frac{10^{k/10}\cdot K1}{N_{Tx,PSFCH}\cdot K3 + k\cdot K1} \ [mW] \quad (15).$$

Ninth manner

The first PRB is a PRB in the common interlace (or a common PRB), and the transmission power of the first PRB may be determined based on (or may satisfy) the following formula:

$$P_{common\_dB} = P_{one\_dB} + 10log_{10}(N_{Tx,PSFCH}) + 10log_{10}(\frac{10^{k/10}}{N_{Tx,PSFCH} \cdot K3 + 10^{k/10} \cdot K1}) \quad [dBm] \quad (16).$$

Here, $P_{common\_dB}$ is the transmission power of the first PRB expressed in decibels; $P_{one\_dB}$ is the transmission power of one PSFCH expressed in decibels, and $P_{one\_dB}$ is determined based on $P_{PSFCH,k}(i)$ in the above Factor 3, such as $P_{one\_dB} = P_{PSFCH,k}(i)$; K1 denotes the number of PRBs in the common interlace(s) corresponding to the $N_{Tx,PSFCH}$ PSFCHs; K3 denotes the number of dedicated PRBs included in one PSFCH; and k is determined based on the difference between the transmission power on one PRB in the common interlace and the transmission power on one dedicated PRB (e.g., k may be equal to the difference between the transmission power on one PRB in the common interlace and the transmission power on one dedicated PRB).

Further, if the transmission power on each of common PRBs among the $N_{Tx,PSFCH}$ PSFCHs selected by the terminal device is determined in the above manner, the total transmission power of the common PRBs among the $N_{Tx,PSFCH}$ PSFCHs may be determined based on (or may satisfy) the following formula:

$$P_{common\_dB\_sum} = P_{one\_dB} + 10log_{10}(N_{Tx,PSFCH}) + 10log_{10}(\frac{10^{k/10} \cdot K1}{N_{Tx,PSFCH} \cdot K3 + 10^{k/10} \cdot K1}) \quad [dBm] \quad (17).$$

Tenth manner

The first PRB is a PRB in the common interlace (or a common PRB), and the transmission power of the first PRB may be determined based on (or may satisfy) the following formula:

$$P_{common\_dB} = P_{dedicated\_dB} + k \quad [dBm] \quad (18).$$

Here, $P_{common\_dB}$ is the transmission power of the first PRB expressed in decibels; $P_{dedicated\_dB}$ is the transmission power on the dedicated PSFCH expressed in decibels, and $P_{dedicated\_dB}$ may be determined, for example, based on the Fourth manner; and k is determined based on the difference between the transmission power on one PRB in the common interlace and the transmission power on one dedicated PRB (e.g., k may be equal to the difference between the transmission power on one PRB in the common interlace and the transmission power on one dedicated PRB, expressed in decibels).

Eleven manner

The first PRB is a dedicated PRB, and the transmission power of the first PRB may be determined based on (or may satisfy) the following formula:

$$P_{dedicated\_dB} = P_{one\_dB} - 10log_{10}(K3) \quad [dBm] \quad (19).$$

Here, $P_{dedicated\_dB}$ is the transmission power of the first PRB expressed in decibels; $P_{one\_dB}$ is the transmission power of one PSFCH expressed in decibels, and $P_{one\_dB}$ is determined based on $P_{PSFCH,k}(i)$ in the above Factor 3, such as $P_{one\_dB} = P_{PSFCH,k}(i)$. The terminal device determines the transmission power on the PRB corresponding to the common interlace based on the implementation, such that the total transmission power on the dedicated PRBs and the total transmission power on the PRBs in the common interlace(s) among the $N_{Tx,PSFCH}$ PSFCHs do not exceed the first maximum transmission power (i.e., $P_{CMAX}$).

Twelve manner

The minimum value or the lowest value (denoted as $P_{min}$) of the transmission power on one PRB is determined based on pre-configuration information and/or network configuration information, and the total transmission power of the PRBs in the common interlace(s) corresponding to the $N_{Tx,PSFCH}$ PSFCHs is $K1 \cdot P_{min}$, here, K1 denotes the total number of the PRBs in the common interlace(s) corresponding to the $N_{Tx,PSFCH}$ PSFCHs. The transmission power on the dedicated PRB corresponding to PSFCH transmission resources is determined based on one or more of: the minimum value or the lowest value of the transmission power on one PRB; the number of the $N_{Tx,PSFCH}$ PSFCHs selected by the terminal device; the total number of PRBs in the common interlace(s) corresponding to the $N_{Tx,PSFCH}$ PSFCHs; a first maximum transmission power; the number (i.e., K3) of dedicated PRBs included in transmission resources for one PSFCH; or the transmission power of one PSFCH.

In one implementation, the first PRB is a PRB in the common interlace, and the transmission power of the first PRB may be determined based on the minimum value or the lowest value (i.e., $P_{min}$) of the transmission power on one PRB. Specifically,

$$P_{common} = C \cdot P_{min} \quad [mW] \quad (20).$$

Here, the value of C is determined based on predefinition by a protocol, pre-configuration information or network configuration information. By default, the value of C is 1.

In one implementation, the first PRB is a dedicated PRB, and the transmission power of the first PRB may be determined based on (or may satisfy) the following formula:

$$P_{dedicated} = (P_2 - K1 \cdot P_{common}) \cdot \frac{1}{N_{Tx,PSFCH} \cdot K3} \quad [mW] \quad (21);$$

or,

$$P_{dedicated} = \min\left((P_2 - K1 \cdot P_{common}) \cdot \frac{1}{N_{Tx,PSFCH} \cdot K3}, \frac{P_{one}}{K3}\right) \quad [mW] \quad (22);$$

or,

$$P_{dedicated} = \max\left((P_2 - K1 \cdot P_{common}) \cdot \frac{1}{N_{Tx,PSFCH} \cdot K3}, \frac{P_{one}}{K3}\right) \quad [mW] \quad (23).$$

Here, $P_2$ is determined based on the first maximum transmission power, for example, $P_2 = 10^{PCMAX/10}$; or, $P_2$ is determined based on the transmission power (i.e., $P_{one}$) of one PSFCH, for example, $P_2 = N_{Tx,PSFCH} \cdot P_{one}$. $P_{one}$ is determined based on $P_{PSFCH,k}(i)$ in the above Factor 3, for example, $P_{one}$ is the power value corresponding to $P_{PSFCH,k}(i)$ (expressed in dBm), i.e., $P_{one} = 10^{PPSFCH,k/10}$ $P_{common}$ can be determined based on the formula (20). It should be understood that when C = 1 in the formula (20), $P_{common}$ in the formula (21), the formula (22), and the formula (23) may be replaced with $P_{min}$. min() denotes the minimum value operation, and max() denotes the maximum value operation.

It should be noted that the formulas (20), (21), (22), and (23) may be expressed in a decibel-based or dBm-based form, which will not be elaborated herein.

It should be noted that in the formulas (1) to (12), (14) to (17), and (21) to (23), $N_{TX,PSFCH} \cdot K3$ denotes the number of dedicated PRBs corresponding to the $N_{Tx,PSFCH}$ PSFCHs. If the dedicated PRBs corresponding to transmission resources for different PSFCHs are different, the number of dedicated PRBs corresponding to the $N_{Tx,PSFCH}$ PSFCHs is equal to $N_{Tx,PSFCH} \cdot K3$. If the dedicated PRBs corresponding to transmission resources for different PSFCHs may be the same, the number of dedicated PRBs corresponding to the $N_{Tx,PSFCH}$ PSFCHs is denoted as K5, and $N_{TX,PSFCH} \cdot K3$ in the above formulas is replaced with K5.

It should be noted that in the above manners, when the first PRB is a PRB in the common interlace, the transmission power of the first PRB is a sum of transmission powers of target PSFCH(s). The target PSFCH(s) are PSFCH(s), whose transmission resources include the common interlace, among the $N_{Tx,PSFCH}$ PSFCHs selected by the terminal device. For example, if the frequency domain resources of S PSFCHs (S is a positive integer greater than or equal to 1) among the $N_{Tx,PSFCH}$ PSFCHs selected by the terminal device include the common interlace, the S PSFCHs are the target PSFCHs, and the transmission power of the first PRB is the sum of the transmission powers of the S PSFCHs on the first PRB.

After determining the transmission power on the PRB in the common interlace and the transmission power on the dedicated PRB, the terminal device determines whether the sum of "the transmission powers on the PRBs in the common interlaces" and "the transmission powers on the dedicated PRBs" exceeds the first maximum transmission power (i.e., the power value corresponding to $P_{CMAX}$), if the sum does not exceed the first maximum transmission power, the terminal device may transmit the PSFCH using the determined transmission power on the PRB in the common interlace and the determined transmission power on the dedicated PRB, otherwise, the terminal device needs to adjust the transmission power on the PRB. Specifically, the transmission power on each PRB can be adjusted in the following manner. The sum of "the transmission powers on the PRBs in the common interlaces" and "the transmission powers on the dedicated PRBs" is denoted as $P_{sum}$, i.e.,

$$P_{sum} = P_{common\_sum} + P_{dedicated\_sum} \qquad (24).$$

Here, $P_{common-sum}$ denotes the sum of the transmission powers on the PRBs in the common interlaces, for example, $P_{common-sum}$ is determined based on the formula (10) or the formula (15); and $P_{dedicated\_sum}$ denotes the sum of the transmission powers on the dedicated PRBs, for example, $P_{dedicated\_sum}$ is determined based on the formula (2) or the formula (6).

In one implementation, the transmission power on the PRB in the common interlace is reduced, so that the total transmission power is not greater than or does not exceed the first maximum transmission power. In the present implementation, only the transmission power on the PRB in the common interlace is reduced, and the transmission power on the dedicated PRB is not reduced. For example, the terminal device may reduce the transmission power on the PRB in the common interlace based on the implementation of the terminal device, so that the sum of "the transmission powers on the PRBs in the common interlaces" and "the transmission powers on the dedicated PRBs" does not exceed the first maximum transmission power. For another example, the terminal device may reduce the transmission powers on the PRBs in all common interlaces by a common scaling factor, here, the scaling factor is determined based on the first maximum transmission power, the sum of the transmission powers on the PRBs in the common interlaces, and the sum of the transmission powers on the dedicated PRBs, for example, the scaling factor s1 is determined based on the following formula:

$$s1 = \frac{P_1 - P_{dedicated\_sum}}{P_{common\_sum}} \qquad (25).$$

Here, $P_1$ is determined based on the first maximum transmission power, for example, $P_1$ is the power value corresponding to $P_{CMAX}$, i.e., $P_1 = 10^{PCMAX/10}$.

The transmission power on the PRB in the common interlace is adjusted based on the scaling factor: $P_{common\_adju} = s1 \cdot P_{common}$.

Here, $P_{common}$ denotes the transmission power on the PRB in one common interlace, for example, $P_{common}$ is determined based on the formula (9), the formula (13) or the formula (14).

In another implementation, the terminal device reduces the transmission power on the PRB in the common interlace and the transmission power on the dedicated PRB, so that the total transmission power is not greater than or does not exceed the first maximum transmission power. In the present implementation, the transmission power on the PRB in the common interlace and the transmission power on the dedicated PRB are simultaneously reduced. For example, the terminal device reduces the transmission power on the PRBs in all common interlaces and the transmission powers on all dedicated PRBs by a common scaling factor, where the scaling factor is determined based on the first maximum transmission power, the sum of the transmission powers on the PRBs in the common interlaces, and the sum of the transmission powers on the dedicated PRBs, for example, the scaling factor s2 is determined based on the following formula:

$$s2 = \frac{P_1}{P_{common\_sum} + P_{dedicated\_sum}} \qquad (26).$$

Here, $P_1$ is determined based on the first maximum transmission power, for example, $P_1$ is the power value corresponding to $P_{CMAX}$, i.e., $P_1 = 10^{PCMAX/10}$.

The transmission power on the PRB in the common interlace is adjusted based on the scaling factor: $P_{common\_adju} = s2 \cdot P_{common}$.

The transmission power on the dedicated PRB is adjusted based on the scaling factor: $P_{dedicated\_adju} = s2 \cdot P_{dedicated}$.

Here, $P_{common}$ denotes the transmission power on the PRB in one common interlace, for example, $P_{common}$ is determined based on the formula (9), the formula (13) or the formula (14). $P_{dedicated}$ denotes the transmission power on one dedicated PRB, for example, $P_{dedicated}$ is determined based on the formula (1) or the formula (5).

In order to facilitate understanding, the method for determining the transmission power of the PSFCH with the first structure will be described in more detail below with reference to a specific example. It should be noted that the following example is merely to help those skilled in the art understand the embodiments of the present disclosure, and are not intended to limit the embodiments of the present disclosure to the specific numerical values or specific scenarios illustrated. It will be apparent to those skilled in the art that various equivalent modifications or variations can be made based on the example given below, and such modifications or variations also fall within the scope of the embodiments of the present disclosure.

The SL-U system supports power control for PSFCH based on downlink PL, but does not support power control based on sidelink PL. In the SL-U system, the terminal device may transmit multiple PSFCHs on one symbol. The maximum number of PSFCHs simultaneously transmitted by the terminal device does not exceed the maximum PSFCH transmission number $N_{max,PSFCH}$. The value of $N_{max,PSFCH}$ is related to the capability of the terminal device. For a certain transmission occasion, the number of PSFCHs to be transmitted by the terminal device is $N_{sch,Tx,PSFCH}$. The $N_{sch,Tx,PSFCH}$ PSFCHs may include PSFCH(s) for carrying HARQ-ACK information for PSSCH(s) and/or PSFCH(s) for carrying conflict information.

Operation 1: the terminal device selects $N_{Tx,PSFCH}$ PSFCHs.

In Operation 1, the terminal device may determine the transmission power of a single PSFCH based on the number of dedicated PRBs included in one PSFCH, and select $N_{Tx,PSFCH}$ PSFCHs. For the PSFCH transmission k in the PSFCH transmission occasion i, $1 \le k \le N_{Tx,PSFCH}$, the PSFCHs may be selected in the following manner.

First, if the terminal device is configured with the parameter dl-PO-PSFCH, the transmission power of the single PSFCH is determined based on the following formula:

$$P_{PSFCH,one} = P_{O,PSFCH} + 10 \log_{10}(2^\mu \cdot K3) + \alpha_{PSFCH} \cdot PL \text{ [dBm]} \quad (27).$$

In the formula (27), $P_{O,PSFCH}$ denotes the value of P0 for power control based on downlink PL. $P_{O,PSFCH}$ is determined based on the parameter dl-PO-PSFCH. $\alpha_{PSFCH}$ denotes the downlink PL compensation factor, and $\alpha_{PSFCH}$ is determined based on the parameter dl-Alpha-PSFCH. If $\alpha_{PSFCH}$ is not configured by the higher layer, the value of $\alpha_{PSFCH}$ may be 1. PL denotes the downlink pathloss. K3 is determined based on the number of dedicated PRBs occupied by one PSFCH (e.g., K3 may be the number of dedicated PRBs occupied by one PSFCH). $\mu$ is determined based on the sidelink subcarrier spacing. The relationship between $\mu$ and subcarrier spacing can be seen in Table 1 above.

In different cases, the number of $N_{Tx,PSFCH}$ PSFCHs selected by the terminal device and the determined transmission power of one PSFCH may be different, which will be discussed in each case below.

Case 1: if $N_{sch,Tx,PSFCH} \le N_{max,PSFCH}$
Case 1-1: if $P_{PSFCH,one} + 10\log_{10}(N_{sch,Tx,PSFCH}) \le P_{CMAX}$

In case 1-1, $N_{Tx,PSFCH} = N_{sch,Tx,PSFCH}$; $P_{PSFCH,k}(i) = P_{PSFCH,one}$ [dBm].
Case 1-2: if $P_{PSFCH,one} + 10\log_{10}(N_{sch,Tx,PSFCH}) > P_{CMAX}$

Here, $P_{CMAX}$ denotes a first maximum transmission power or is determined based on a first maximum transmission power.

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \ge \max\left(1, \sum_{i=1}^{K} M_i\right)$. For the PSFCHs carrying HARQ-ACK information, $M_i$ ($1 \le i \le 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$P_{PSFCH,one} + 10\log_{10}\left(\max\left(1, \sum_{i=1}^{K} M_i\right)\right) \le P_{CMAX}$ , otherwise K = 0.

In Case 1-2, $P_{PSFCH,k}(i) = \min(P_{CMAX} - 10\log_{10}(N_{Tx,PSFCH}), P_{PSFCH,one})$ [dBm].
Case 2: if $N_{sch,Tx,PSFCH} > N_{max,PSFCH}$

In Case 2, the terminal device autonomously determines the $N_{max,PSFCH}$ PSFCHs with ascending order of priority values.
Case 2-1: if $P_{PSFCH,one} + 10\log_{10}(N_{max,PSFCH}) \le P_{CMAX}$

In case 2-1, $N_{Tx,PSFCH} = N_{max,PSFCH}$; $P_{PSFCH,k}(i) = P_{PSFCH,one}$ [dBm].
Case 2-2: if $P_{PSFCH,one} + 10\log_{10}(N_{max,PSFCH}) > P_{CMAX}$

Here, $P_{CMAX}$ denotes a first maximum transmission power or is determined based on a first maximum transmission power.

In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10log_{10}\left(max\left(1, \sum_{i=1}^{K} M_i\right)\right) \leq P_{CMAX}$$, otherwise K = 0.

In Case 2-2, $P_{PSFCH,k}(i) = min(P_{CMAX} - 10log_{10}(N_{Tx,PSFCH}), P_{PSFCH,one})$ [dBm].

The above description relates to the situation where the terminal device is configured with the parameter dl-PO-PSFCH. If the terminal device is not configured with the parameter dl-PO-PSFCH, the terminal device autonomously selects the $N_{Tx,PSFCH}$ ($N_{Tx,PSFCH} \geq 1$) PSFCHs with ascending order of priority values, and the transmission power of each PSFCH is $P_{PSFCH,k}(i) = P_{CMAX} - 10log_{10}(N_{Tx,PSFCH})$ [dBm].

In the process of selecting the PSFCHs described in Operation 1, the terminal device selects the PSFCH only based on the dedicated PRBs included in the PSFCH, but does not consider the transmission power on the PRB in the common interlace. When determining the transmission power on the PRB in each PSFCH, it is necessary to determine both the transmission power on the dedicated PRB and the transmission power on the PRB in the common interlace. Therefore, after performing Operation 1, it is necessary to continue to perform Operation 2.

Operation 2: determine the transmission power on one PRB for transmitting the PSFCH.

The $N_{Tx,PSFCH}$ PSFCHs are selected in Operation 1, where each PSFCH includes K3 dedicated PRBs. The $N_{Tx,PSFCH}$ PSFCHs include a total of ($N_{Tx,PSFCH}$ · K3) dedicated PRBs. The transmission power of each PSFCH is $P_{PSFCH,k}$ dBm, thus the total transmission power of the $N_{Tx,PSFCH}$ PSFCH is $N_{TX,PSFCH}$ · $P_{one}$, where $P_{one}$ denotes the power value corresponding to $P_{PSFCH,k}$, and $P_{one} = 10^{P_{PSFCH,k}/10}$ milliwatts (mW).

Then, the total transmission power of the $N_{Tx,PSFCH}$ PSFCHs may be allocated to respective PRBs corresponding to the $N_{Tx,PSFCH}$ PSFCHs in a certain manner. For example, the transmission power on each PRB may be determined using one or more of the First to twelve manners mentioned above, which are not described in detail here.

The second embodiment: the channel structure of the first PSFCH is the second structure

Hereinafter, a method for determining the transmission power of the first PSFCH will be described first with reference to Embodiment 2.1, and then a method for determining the transmission power on one PRB in the first PSFCH will be described with reference to Embodiment 2.2. It should be understood that Embodiment 2.1 and Embodiment 2.2 may be independent of each other or may be combined with each other. For example, the transmission power of the first PSFCH may be determined according to the implementation of Embodiment 2.1, and the transmission power on one PRB in the first PSFCH may be determined according to the implementation of Embodiment 2.2. For another example, the transmission power on one PRB in the first PSFCH may be determined according to the implementation of Embodiment 2.2, but the method for determining the transmission power of the first PSFCH is not limited. For another example, the transmission power of the first PSFCH may be determined according to the implementation of Embodiment 2.1, but the method for determining the transmission power on one PRB in the first PSFCH is not limited.

Example 2.1: determination of the transmission power of the first PSFCH

In some implementations, the transmission power of the first PSFCH is determined based on the number of PRBs (or called actual PRBs) included in one interlace or the number of reference PRBs included in one interlace. The number of reference PRBs included in one interlace may be determined, for example, based on protocol-predefined information, pre-configuration information, and/or configuration information of a network device. Exemplarily, the protocol-predefined information, the pre-configuration information, and/or the configuration information of the network device include a parameter $M_{RB}^{PSFCH}$ for indicating the number of reference PRBs included in one interlace. For example, the number of reference PRBs included in one interlace is determined to be 10 based on the protocol-predefined information, that is, $M_{RB}^{PSFCH} = 10$. By determining the transmission power of the first PSFCH based on the number of PRBs included in one interlace or the number of reference PRBs included in one interlace, this method for determining the transmission power of the first PSFCH can match the channel structure of the first PSFCH, so that the determined transmission power of the first PSFCH is more accurate.

In some implementations, the transmission power of the first PSFCH is determined based on the number of PRBs included in one interlace or the number of reference PRBs included in one interlace, which may include that: the transmission power of the first PSFCH is determined based on a transmission power ($P_{PSFCH,one}$) of a single PSFCH, the transmission power of the single PSFCH is determined based on the number of reference PRBs included in one interlace.

In some implementations, the transmission power of the single PSFCH may be determined based on one or more of: the number (i.e., $M_{RB}^{PSFCH}$ ) of reference PRBs included in one interlace; a parameter for power control based on downlink pathloss; a downlink pathloss (PL); or a parameter $\mu$ determined based on a subcarrier spacing.

In some implementations, the parameter for the power control based on downlink pathloss may include a P0 value for the power control based on downlink pathloss. This parameter may be denoted by $P_{O,PSFCH}$. $P_{O,PSFCH}$ may be determined based on the parameter dl-P0-PSFCH configured by the higher layer.

In some implementations, the parameter for the power control based on downlink pathloss may include an $\alpha$ value for the power control based on downlink pathloss. This parameter may be denoted by $\alpha_{PSFCH}$. $\alpha_{PSFCH}$ may also be referred to as a downlink pathloss compensation factor. $\alpha_{PSFCH}$ may be determined based on the parameter dl-Alpha-PSFCH configured by the higher layer. If this parameter is not configured by the higher layer, the value of $\alpha_{PSFCH}$ may be 1.

In some implementations, the downlink pathloss (PL) may be determined based on measurement of the terminal device.

In some implementations, the value of the parameter $\mu$ determined based on the subcarrier spacing may be determined based on the subcarrier spacing. The correspondence between $\mu$ and subcarrier spacing can be seen in Table 1 above.

Exemplarily, the transmission power of the single PSFCH may be determined based on (or may satisfy) the following formula:

$$P_{PSFCH,one} = P_{O,PSFCH} + 10\log_{10}\left(2^{\mu} \cdot M_{RB}^{PSFCH}\right) + \alpha_{PSFCH} \cdot PL.$$

Embodiment 2.2: determination of the transmission power of the first PRB

Embodiment 2.1 describes the method for determining the transmission power of the first PSFCH in detail. Since the number of PRBs included in the interlace corresponding to transmission resources for the first PSFCH may be different from the number of reference PRBs included in one interlace, it is also necessary to determine the transmission power of one PRB (hereinafter, referred to as the first PRB for convenience of description) for transmitting the first PSFCH.

In some implementations, the transmission power of the first PRB is determined based on one or more of: the transmission power ($P_{PSFCH,one}$) of the single PSFCH; the number of $N_{Tx,PSFCH}$ PSFCHs selected by the terminal device; RB set(s) corresponding to the $N_{Tx,PSFCH}$ PSFCHs; interlace information corresponding to the $N_{Tx,PSFCH}$ PSFCHs; a transmission power of one PSFCH; the number of PRBs included in an interlace corresponding to each of the $N_{Tx,PSFCH}$ PSFCHs; or the number of reference PRBs included in the interlace corresponding to each of the $N_{Tx,PSFCH}$ PSFCHs.

Parameters or factors that can be considered when determining the transmission power of the first PRB will be described in detail below.

**Factor 1: the transmission power of the single PSFCH**

In some implementations, the transmission power of the single PSFCH may be determined based on one or more of: the number (i.e., $M_{RB}^{PSFCH}$ ) of reference PRBs included in one interlace; a parameter for power control based on downlink pathloss; a downlink pathloss (PL); or a parameter $\mu$ determined based on a subcarrier spacing.

In some implementations, the number of reference PRBs included in one interlace may be determined, for example, based on pre-configuration information and/or configuration information of a network device.

In some implementations, the parameter for the power control based on downlink pathloss may include a P0 value for the power control based on downlink pathloss. This parameter may be denoted by $P_{O,PSFCH}$. $P_{O,PSFCH}$ may be determined based on the parameter dl-P0-PSFCH configured by the higher layer.

In some implementations, the parameter for the power control based on downlink pathloss may include an $\alpha$ value for the power control based on downlink pathloss. This parameter may be denoted by $\alpha_{PSFCH}$. $\alpha_{PSFCH}$ may also be referred to as a downlink pathloss compensation factor. $\alpha_{PSFCH}$ may be determined based on the parameter dl-Alpha-PSFCH configured by the higher layer. If this parameter is not configured by the higher layer, the value of $\alpha_{PSFCH}$ may be 1.

In some implementations, the downlink pathloss (PL) may be determined based on measurement of the terminal device.

In some implementations, the value of the parameter $\mu$ determined based on the subcarrier spacing may be determined based on the subcarrier spacing. The correspondence between $\mu$ and subcarrier spacing can be seen in Table 1 above.

Exemplarily, the transmission power of the single PSFCH may be determined based on (or may satisfy) the following formula:

$$P_{PSFCH,one} = P_{O,PSFCH} + 10 \log_{10}\left(2^\mu \cdot M_{RB}^{PSFCH}\right) + \alpha_{PSFCH} \cdot PL.$$

Factor 2: the number of $N_{Tx,PSFCH}$ PSFCHs selected by the terminal device

In the time domain symbol corresponding to the PSFCH transmission resource or the PSFCH transmission occasion, there are multiple PSFCHs to be transmitted, and the terminal needs to select, from the multiple PSFCHs to be transmitted, $N_{Tx,PSFCH}$ PSFCHs for transmission. The embodiments of the present disclosure do not specifically limit the manner in which the terminal device selects the $N_{Tx,PSFCH}$ PSFCHs. For example, in some implementations, the terminal device may select the $N_{Tx,PSFCH}$ PSFCHs based on one or more of: the transmission power of the single PSFCH; a first maximum transmission power; the number of PSFCHs to be transmitted by the terminal device; a priority corresponding to a PSFCH; or the number of reference PRBs included in one interlace.

The first maximum transmission power may be determined based on a configured maximum output power. The configured maximum output power may be determined based on pre-configuration information and/or configuration information of a network device. For example, the configured maximum output power may be determined based on the higher layer parameter sl-maxTxPower. For example, the first maximum transmission power is denoted by $P_{CMAX}$, in units of dBm.

A specific example in which the terminal device selects the $N_{Tx,PSFCH}$ PSFCHs is given below.

For example, the terminal device may determine the transmission power of the single PSFCH based on the number of reference PRBs included in one interlace, and select the $N_{Tx,PSFCH}$ PSFCHs. For the PSFCH transmission k in the PSFCH transmission occasion i, $1 \leq k \leq N_{Tx,PSFCH}$, the PSFCHs may be selected in the following manner.

First, if the terminal device is configured with the parameter dl-PO-PSFCH, the transmission power of the single PSFCH is determined based on the following formula:

$$P_{PSFCH,one} = P_{O,PSFCH} + 10 \log_{10}\left(2^\mu \cdot M_{RB}^{PSFCH}\right) + \alpha_{PSFCH} \cdot PL \quad [dBm].$$

After determining $P_{PSFCH,one}$, the subsequent operations can be determined in different cases, and $N_{Tx,PSFCH}$ determined in different cases may be different.

Case 1: if $N_{sch,Tx,PSFCH} \leq N_{max,PSFCH}$
Case 1-1: if $P_{PSFCH,one} + 10\log_{10}(N_{sch,Tx,PSFCH}) \leq P_{CMAX}$

In Case 1-1, $N_{Tx,PSFCH} = N_{sch,Tx,PSFCH}$; $P_{PSFCH,k}(i) = P_{PSFCH,one}$ [dBm].
Case 1-2: if $P_{PSFCH,one} + 10\log_{10}(N_{sch,Tx,PSFCH}) > P_{CMAX}$

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX}$$ , otherwise K = 0.

In Case 1-2, $P_{PSFCH,k}(i) = \min(P_{CMAX} - 10\log_{10}(N_{Tx,PSFCH}), P_{PSFCH,one})$ [dBm].
Case 2: if $N_{sch,Tx,PSFCH} > N_{max,PSFCH}$
In Case 2, the terminal device autonomously determines the $N_{max,PSFCH}$ PSFCHs with ascending order of priority values.
Case 2-1: if $P_{PSFCH,one} + 10\log_{10}(N_{max,PSFCH}) \leq P_{CMAX}$
In Case 2-1, $N_{Tx,PSFCH} = N_{max,PSFCH}$; $P_{PSFCH,k}(i) = P_{PSFCH,one}$ [dBm].
Case 2-2: if $P_{PSFCH,one} + 10\log_{10}(N_{max,PSFCH}) > P_{CMAX}$
In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX}$$ , otherwise K = 0.

In Case 2-2, $P_{PSFCH,k}(i) = \min(P_{CMAX} - 10\log_{10}(N_{Tx,PSFCH}), P_{PSFCH,one})$ [dBm].

The above description relates to the situation where the terminal device is configured with the parameter dl-PO-PSFCH. If the terminal device is not configured with the parameter dl-PO-PSFCH, the terminal device autonomously selects the $N_{Tx,PSFCH}$ ($N_{Tx,PSFCH} \geq 1$) PSFCHs with ascending order of priority values, and the transmission power of each PSFCH is $P_{PSFCH,k}(i) = P_{CMAX} - 10\log_{10}(N_{Tx,PSFCH})$ [dBm].

**Factor 3: the transmission power of one PSFCH**

The embodiments of the present disclosure do not specifically limit the manner in which the terminal device determines the transmission power of one PSFCH. For example, in some implementations, the terminal device may determine the transmission power of one PSFCH based on one or more of: the $N_{Tx,PSFCH}$ PSFCHs; the transmission power of the single PSFCH; a first maximum transmission power; the number (denoted as $N_{sch,Tx,PSFCH}$) of PSFCHs to be transmitted by the terminal device; a priority corresponding to a PSFCH; or the number of reference PRBs included in one interlace.

The first maximum transmission power may be determined based on a configured maximum output power. The configured maximum output power may be determined based on pre-configuration information and/or configuration information of a network device. For example, the configured maximum output power may be determined based on the higher layer parameter sl-maxTxPower. For example, the first maximum transmission power is denoted by $P_{CMAX}$, in units of dBm.

A specific example in which the terminal device determines the transmission power of one PSFCH is given below.

For example, the terminal device may determine the transmission power of the single PSFCH based on the number of reference PRBs included in one interlace, and select the $N_{Tx,PSFCH}$ PSFCHs. For the PSFCH transmission k in the PSFCH transmission occasion i, $1 \leq k \leq N_{Tx,PSFCH}$, the PSFCHs may be selected in the following manner, and the transmission power $P_{PSFCH,k}(i)$ of one PSFCH is determined.

First, if the terminal device is configured with the parameter dl-PO-PSFCH, the transmission power of the single PSFCH is determined based on the following formula:

$$P_{PSFCH,one} = P_{O,PSFCH} + 10\log_{10}\left(2^\mu \cdot M_{RB}^{PSFCH}\right) + \alpha_{PSFCH} \cdot PL \quad [dBm].$$

After determining $P_{PSFCH,one}$, the subsequent operations can be determined in different cases, and $N_{Tx,PSFCH}$ determined in different cases may be different.

Case 1: if $N_{sch,Tx,PSFCH} \leq N_{max,PSFCH}$
Case 1-1: if $P_{PSFCH,one} + 10\log_{10}(N_{sch,Tx,PSFCH}) \leq P_{CMAX}$

In Case 1-1, $N_{Tx,PSFCH} = N_{sch,Tx,PSFCH}$; $P_{PSFCH,k}(i) = P_{PSFCH,one}$ [dBm].

Case 1-2: if $P_{PSFCH,one} + 10\log_{10}(N_{sch,Tx,PSFCH}) > P_{CMAX}$

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ ($i > 8$) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX}$$ ,otherwise K = 0.

In Case 1-2, $P_{PSFCH,k}(i) = \min(P_{CMAX} - 10\log_{10}(N_{Tx,PSFCH}), P_{PSFCH,one})$ [dBm].

Case 2: if $N_{sch,Tx,PSFCH} > N_{max,PSFCH}$

In Case 2, the terminal device autonomously determines the $N_{max,PSFCH}$ PSFCHs with ascending order of priority values.

Case 2-1: if $P_{PSFCH,one} + 10\log_{10}(N_{max,PSFCH}) \leq P_{CMAX}$

In Case 2-1, $N_{TX,PSFCH} = N_{max,PSFCH}$; $P_{PSFCH,k}(i) = P_{PSFCH,one}$ [dBm].

Case 2-2: if $P_{PSFCH,one} + 10\log_{10}(N_{max,PSFCH}) > P_{CMAX}$

In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \geq \max\left(1, \sum_{i=1}^{K} M_i\right)$. For the PSFCHs carrying HARQ-ACK information, $M_i$ ($1 \leq i \leq 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \leq P_{CMAX}$$ , otherwise K = 0.

In Case 2-2, $P_{PSFCH,k}(i) = \min(P_{CMAX} - 10\log_{10}(N_{Tx,PSFCH}), P_{PSFCH,one})$ [dBm].

The above description relates to the situation where the terminal device is configured with the parameter dl-PO-PSFCH. If the terminal device is not configured with the parameter dl-PO-PSFCH, the terminal device autonomously selects the $N_{Tx,PSFCH}$ ($N_{Tx,PSFCH} \geq 1$) PSFCHs with ascending order of priority values, and the transmission power of each PSFCH is $P_{PSFCH,k}(i) = P_{CMAX} - 10\log_{10}(N_{Tx,PSFCH})$ [dBm].

It is noted that the transmission power $P_{PSFCH,k}(i)$ of each of the $N_{Tx,PSFCH}$ PSFCHs selected by the terminal device is identical, that is, the transmission power of one PSFCH is $P_{PSFCH,k}(i)$.

**Factor 4: RB set(s) corresponding to the $N_{Tx,PSFCH}$ PSFCHs**

For example, a resource pool includes four RB sets, and RB set indexes corresponding to the four RB sets are 0, 1, 2, and 3, respectively. In one PSFCH transmission occasion, the $N_{Tx,PSFCH}$ PSFCHs selected by the terminal device are located in three RB sets among the four RB sets, and RB set indexes corresponding to the three RB sets are 0, 1, and 2, respectively. In this case, the RB sets corresponding to the $N_{Tx,PSFCH}$ PSFCHs are RB set 0, RB set 1, and RB set 2.

**Factor 5: interlace information corresponding to the $N_{Tx,PSFCH}$ PSFCHs**

For one RB set, different interlaces may correspond to different numbers of PRBs. For example, interlace 0 in the RB set includes 10 PRBs while interlace 1 in the RB set includes 11 PRBs. Therefore, the transmission power of one PRB in the PSFCH can be determined based on the interlace information corresponding to the selected $N_{Tx,PSFCH}$ PSFCHs.

Factors that can be considered when determining the transmission power of the first PRB have been described in detail above, and several possible manners for determining the transmission power of the first PRB are given below.

Manner a

The transmission power of the first PRB may be determined based on (or may satisfy) the following formula:

$$N_{Tx,PSFCH} \cdot P_{one} \cdot \frac{1}{\sum_{j=1}^{N_{Tx,PSFCH}} K2_j} \quad [mW] \qquad (27);$$

or,

$$\min\left(N_{Tx,PSFCH} \cdot P_{one} \cdot \frac{1}{\sum_{j=1}^{N_{Tx,PSFCH}} K2_j}, \frac{P_{one}}{M_{RB}^{PSFCH}}\right) \quad [mW] \quad (28);$$

or,

$$\max\left(N_{Tx,PSFCH} \cdot P_{one} \cdot \frac{1}{\sum_{j=1}^{N_{Tx,PSFCH}} K2_j}, \frac{P_{one}}{M_{RB}^{PSFCH}}\right) \quad [mW] \quad (29).$$

Here, $P_{one}$ denotes the transmission power of one PSFCH, which is determined based on $P_{PSFCH,k}(i)$ in the above Factor 3, for example, $P_{one}$ is the power value corresponding to $P_{PSFCH,k}(i)$ (expressed in dBm). $K2_j$ denotes the number of PRBs included in the transmission resources for the j-th PSFCH of the $N_{Tx,PSFCH}$ PSFCHs, j is a positive integer,

and $1 \leq j \leq N_{Tx,PSFCH}$. For example, if the transmission resources for one PSFCH include the interlace b in the RB set a, the number of PRBs included in the transmission resources for the PSFCH is the number of PRBs included in the interlace b in the RB set a. $M_{RB}^{PSFCH}$ denotes the number of reference PRBs included in one interlace. min() denotes the minimum value operation, and max() denotes the maximum value operation.

Manner b

The transmission power of the first PRB may be determined based on (or may satisfy) the following formula:

$$P_{one\_dB} + 10\log_{10}(N_{Tx,PSFCH}) + 10\log_{10}(\frac{1}{\sum_{j=1}^{N_{Tx,PSFCH}} K2_j}) \ [dBm] \quad (30);$$

or,

$$\min(P_{one\_dB} + 10\log_{10}(N_{Tx,PSFCH}) + 10\log_{10}(\frac{1}{\sum_{j=1}^{N_{Tx,PSFCH}} K2_j}), \ P_{one\_dB} - 10\log_{10}(M_{RB}^{PSFCH}))$$

$$[dBm] \quad (31); \quad or,$$

$$\max(P_{one\_dB} + 10\log_{10}(N_{Tx,PSFCH}) + 10\log_{10}(\frac{1}{\sum_{j=1}^{N_{Tx,PSFCH}} K2_j}), \ P_{one\_dB} - 10\log_{10}(M_{RB}^{PSFCH}))$$

$$[dBm] \quad (32).$$

Here, $P_{one\_dB}$ is the transmission power of one PSFCH expressed in decibels, and $P_{one\_dB}$ is determined based on $P_{PSFCH,k}(i)$ in the above Factor 3, for example, $P_{one\_dB} = P_{PSFCH,k}(i)$. $K2_j$ denotes the number of PRBs included in the transmission resources for the j-th PSFCH of the $N_{Tx,PSFCH}$ PSFCHs, j is a positive integer, and $1 \leq j \leq N_{Tx,PSFCH}$. For example, if the transmission resources for one PSFCH include the interlace b in the RB set a, the number of PRBs included in the transmission resources for the PSFCH is the number of PRBs included in the interlace b in the RB set a. $M_{RB}^{PSFCH}$ denotes the number of reference PRBs included in one interlace. min() denotes the minimum value operation, and max() denotes the maximum value operation.

It should be noted that in the formulas (27) to (32), $\sum_{j=1}^{N_{Tx,PSFCH}} K2_j$ denotes the number of frequency-domain non-overlapping PRBs corresponding to the transmission resources for the $N_{Tx,PSFCH}$ PSFCHs. In this case, it is assumed that the PRBs corresponding to the frequency domain resources for respective PSFCHs are different. If the PRBs corresponding to the frequency domain resources for respective PSFCHs may be the same, it is necessary to replace $\sum_{j=1}^{N_{Tx,PSFCH}} K2_j$ in the above formulas with K6, where the value of K6 is determined based on the number of frequency-domain non-overlapping PRBs corresponding to the transmission resources for the $N_{Tx,PSFCH}$ PSFCHs. For example, K6 is equal to the number of frequency-domain non-overlapping PRBs corresponding to the transmission resources for the $N_{Tx,PSFCH}$ PSFCHs.

In order to facilitate understanding, the method for determining the transmission power of the PSFCH with the second structure will be described in more detail below with reference to a specific example. It should be noted that the following example is merely to help those skilled in the art understand the embodiments of the present disclosure, and are not intended to limit the embodiments of the present disclosure to the specific numerical values or specific scenarios illustrated. It will be apparent to those skilled in the art that various equivalent modifications or variations can be made based on the example given below, and such modifications or variations also fall within the scope of the embodiments of the present disclosure.

The SL-U system supports power control for PSFCH based on downlink PL, but does not support power control based on sidelink PL. In the SL-U system, the terminal device may transmit multiple PSFCHs on one symbol. The maximum number of PSFCHs simultaneously transmitted by the terminal device does not exceed the maximum PSFCH transmission number $N_{max,PSFCH}$. The value of $N_{max,PSFCH}$ is related to the capability of the terminal device. For a certain transmission occasion, the number of PSFCHs to be transmitted by the terminal device is $N_{sch,Tx,PSFCH}$. The $N_{sch,Tx,PSFCH}$ PSFCHs may include PSFCH(s) for carrying HARQ-ACK information for PSSCH(s) and/or PSFCH(s) for carrying conflict information.

Operation 1: the terminal device selects $N_{Tx,PSFCH}$ PSFCHs.

In Operation 1, the terminal device may determine the transmission power of a single PSFCH based on the number of reference PRBs included in one interlace, and select $N_{Tx,PSFCH}$ PSFCHs. For the PSFCH transmission k in the PSFCH transmission occasion i, $1 \le k \le N_{Tx,PSFCH}$, the PSFCHs may be selected in the following manner, and the transmission power $P_{PSFCH,k}(i)$ of one PSFCH is determined.

First, if the terminal device is configured with the parameter dl-P0-PSFCH, the transmission power of the single PSFCH is determined based on the following formula:

$$P_{PSFCH,one} = P_{O,PSFCH} + 10 \log_{10}\left(2^{\mu} \cdot M_{RB}^{PSFCH}\right) + \alpha_{PSFCH} \cdot PL \quad [dBm].$$

In the above formula, $P_{O,PSFCH}$ denotes the value of P0 for power control based on downlink PL. $P_{O,PSFCH}$ is determined based on the parameter dl-P0-PSFCH. $\alpha_{PSFCH}$ denotes the downlink PL compensation factor, and $\alpha_{PSFCH}$ is determined based on the parameter dl-Alpha-PSFCH. If $\alpha_{PSFCH}$ is not configured by the higher layer, the value of $\alpha_{PSFCH}$ may be 1. PL denotes the downlink pathloss. $M_{RB}^{PSFCH}$ denotes the number of reference PRBs included in one interlace. $\mu$ is determined based on the sidelink subcarrier spacing. The relationship between $\mu$ and subcarrier spacing can be seen in Table 1 above.

Case 1: if $N_{sch,Tx,PSFCH} \le N_{max,PSFCH}$
Case 1-1: if $P_{PSFCH,one} + 10\log_{10}(N_{sch,Tx,PSFCH}) \le P_{CMAX}$

In Case 1-1, $N_{Tx,PSFCH} = N_{sch,Tx,PSFCH}$; $P_{PSFCH,k}(i) = P_{PSFCH,one}$ [dBm].
Case 1-2: if $P_{PSFCH,one} + 10\log_{10}(N_{sch,Tx,PSFCH}) > P_{CMAX}$

In Case 1-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \ge \max\left(1, \sum_{i=1}^{K} M_i\right)$. For the PSFCHs carrying HARQ-ACK information, $M_i$ ($1 \le i \le 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \le P_{CMAX}$$, otherwise K = 0.

In Case 1-2, $P_{PSFCH,k}(i) = \min(P_{CMAX} - 10\log_{10}(N_{Tx,PSFCH}), P_{PSFCH,one})$ [dBm].
Case 2: if $N_{sch,Tx,PSFCH} > N_{max,PSFCH}$

In Case 2, the terminal device autonomously determines the $N_{max,PSFCH}$ PSFCHs with ascending order of priority values.
Case 2-1: if $P_{PSFCH,one} + 10\log_{10}(N_{max,PSFCH}) \le P_{CMAX}$

In case 2-1, $N_{Tx,PSFCH} = N_{max,PSFCH}$; $P_{PSFCH,k}(i) = P_{PSFCH,one}$ [dBm].
Case 2-2: if $P_{PSFCH,one} + 10\log_{10}(N_{max,PSFCH}) > P_{CMAX}$

In Case 2-2, the terminal device autonomously determines the $N_{Tx,PSFCH}$ PSFCHs with ascending order of priority values (i.e., the priority value of the selected PSFCH is less than or equal to the priority value of the non-selected PSFCH). In the process of selecting the PSFCHs, the terminal device preferentially selects the PSFCHs carrying HARQ-ACK information, and then selects the PSFCHs carrying conflict information. The $N_{Tx,PSFCH}$ PSFCHs selected by the terminal device satisfy: $N_{Tx,PSFCH} \ge \max\left(1, \sum_{i=1}^{K} M_i\right)$. For the PSFCHs carrying HARQ-ACK information, $M_i$ ($1 \le i \le 8$) denotes the number of PSFCHs corresponding to the priority value i. For the PSFCHs carrying conflict information, $M_i$ (i > 8) denotes the number of PSFCHs corresponding to the priority value (i-8). K is the largest value satisfying the formula:

$$P_{PSFCH,one} + 10\log_{10}\left(\max\left(1, \sum_{i=1}^{K} M_i\right)\right) \le P_{CMAX}$$, otherwise K = 0.

In case 2-2, $P_{PSFCH,k}(i) = \min(P_{CMAX} - 10\log_{10}(N_{Tx,PSFCH}), P_{PSFCH,one})$ [dBm].

The above description relates to the situation where the terminal device is configured with the parameter dl-P0-PSFCH. If the terminal device is not configured with the parameter dl-P0-PSFCH, the terminal device autonomously selects the $N_{Tx,PSFCH}$ ($N_{Tx,PSFCH} \ge 1$) PSFCHs with ascending order of priority values, and the transmission power of each PSFCH is $P_{PSFCH,k}(i) = P_{CMAX} - 10\log_{10}(N_{Tx,PSFCH})$ [dBm].

In Operation 1, the power of the PSFCH is determined based on the number of reference PRBs included in one interlace in one RB set. However, for one RB set, different interlaces may correspond to different numbers of PRBs. For example, interlace 0 in one RB set includes 10 PRBs, while interlace 1 in the one RB set includes 11 PRBs. Therefore, it is necessary to proceed to Operation 2 below to determine the transmission power of the PRB in the selected PSFCH.

Operation 2: determine the transmission power on one PRB for transmitting the PSFCH.

The transmission power on one PRB can be determined using, for example, the Manner a mentioned above or the Manner b mentioned above, and the detailed description can be understood with reference to the foregoing description, and will not be repeated here.

In the first embodiment or the second embodiment, assuming that $N_{Tx,PSFCH}$ PSFCHs selected by the terminal device correspond to L1 RB sets, the terminal device may first perform a channel access procedure or an LBT procedure on the L1 RB sets. Then, the terminal device may transmit PSFCHs corresponding to P1 RB sets from among the $N_{Tx,PSFCH}$ PSFCHs. Here, the P1 RB sets are RB sets on which the channel access procedure is successful or a channel sensing result is idle among the L1 RB sets, L1 and P1 are both integers, and P1 is less than or equal to L1. Here, the PSFCHs corresponding to the P1 RB sets from among the $N_{Tx,PSFCH}$ PSFCHs can be understood to mean that for one of the $N_{Tx,PSFCH}$ PSFCHs, if the transmission resources for this PSFCH are located in the P1 RB sets, then this PSFCH is a PSFCH corresponding to the P1 RB sets.

In the first embodiment or the second embodiment, the terminal device may perform a channel access procedure or perform an LBT procedure on L2 RB sets, where the L2 RB sets correspond to PSFCHs to be transmitted (the number of PSFCHs to be transmitted may be $N_{sch,Tx,PSFCH}$). Then, the terminal device may determine $N_{Tx,PSFCH}$ PSFCHs from PSFCHs corresponding to P2 RB sets. The P2 RB sets are RB sets on which the channel access procedure is successful or a channel sensing result is idle among the L2 RB sets. Here, both L2 and P2 are integers, and P2 is less than or equal to L2. Here, the PSFCHs corresponding to the P2 RB sets may be understood to mean that for one PSFCH, if the transmission resources for this PSFCH are located in the P2 RB sets, then this PSFCH is a PSFCH corresponding to the P2 RB sets.

In the above, the method embodiments of the present disclosure are described in detail with reference to FIGS. 1 to 13. In the following, the device embodiments of the present disclosure are described in detail with reference to FIGS. 14 to 15. It should be understood that the description of the method embodiments and the description of the device embodiments correspond to each other, and therefore, the portions not described in detail can be understood with reference to the foregoing method embodiments.

FIG. 14 is a schematic structural diagram of a terminal device according to an embodiment of the present disclosure. The terminal device 1400 of FIG. 14 may include a determination module 1410. The determination module 1410 is configured to determine a transmission power of a first PSFCH. Here, the first PSFCH is an interlace-based PSFCH.

In some implementations, frequency domain resources of the first PSFCH include a common interlace and dedicated PRB(s) in one RB set.

In some implementations, the transmission power of the first PSFCH is determined based on the number of dedicated PRBs included in one PSFCH.

In some implementations, the transmission power of the first PSFCH is determined based on a transmission power of a single PSFCH, and the transmission power of the single PSFCH is determined based on the number of dedicated PRBs included in the one PSFCH.

In some implementations, the transmission power of the single PSFCH is further determined based on one or more of: a parameter for power control based on downlink pathloss; a downlink pathloss; or a parameter determined based on a subcarrier spacing.

In some implementations, the transmission power of the single PSFCH satisfies that:

$$P_{PSFCH,one} = P_{O,PSFCH} + 10\log_{10}(2^\mu \cdot K3) + \alpha_{PSFCH} \cdot PL.$$

Here, $P_{PSFCH,one}$ denotes the transmission power of the single PSFCH, $P_{O,PSFCH}$ is a P0 value for the power control based on downlink pathloss, K3 is determined based on the number of dedicated PRBs included in the one PSFCH, PL is determined based on the downlink pathloss, $\alpha_{PSFCH}$ is an $\alpha$ value for the power control based on downlink pathloss, and $\mu$ denotes the parameter determined based on the subcarrier spacing.

In some implementations, the transmission power of the first PSFCH includes a transmission power of a first PRB for transmitting the first PSFCH.

In some implementations, the transmission power of the first PRB is determined based on one or more of: the transmission power of the single PSFCH; the number of $N_{Tx,PSFCH}$ PSFCHs selected by the terminal device; a transmission power of one PSFCH; the number of dedicated PRBs included in one PSFCH; the number of PRBs in common interlace(s) corresponding to the $N_{Tx,PSFCH}$ PSFCHs; an association relationship between a transmission power on one PRB in the common interlace and a transmission power on one dedicated PRB; or a minimum value of the transmission power on one PRB.

In some implementations, the association relationship includes one of: a difference between the transmission power on the one PRB in the common interlace and the transmission power on the one dedicated PRB; or a ratio of the transmission power on the one PRB in the common interlace to the transmission power on the one dedicated PRB.

In some implementations, the association relationship is determined based on pre-configuration information and/or configuration information of a network device.

In some implementations, the pre-configuration information and/or configuration information of the network device include first indication information for indicating the association relationship.

In some implementations, the number of PRBs in the common interlace(s) corresponding to the $N_{Tx,PSFCH}$ PSFCHs is determined based on one or more of: the number of RB sets corresponding to the $N_{Tx,PSFCH}$ PSFCHs; RB set(s) corresponding to the $N_{Tx,PSFCH}$ PSFCHs; index information of the common interlace(s); the number of PRBs included in a common interlace in one RB set; or the number of reference PRBs included in one interlace in one RB set.

In some implementations, the index information of the common interlace(s) is determined based on pre-configuration information and/or configuration information of a network device.

In some implementations, the number of PRBs included in the common interlace in the one RB set is determined based on pre-configuration information and/or configuration information of a network device.

In some implementations, the number of reference PRBs included in the one interlace in the one RB set is determined based on one or more of: pre-configuration information; configuration information of a network device; index information corresponding to the one RB set; index information corresponding to the common interlace in the one RB set; or configuration information of an intra-cell guard band.

In some implementations, the number of PRBs in the common interlace(s) corresponding to the $N_{Tx,PSFCH}$ PSFCHs satisfies that:

$$K1 = \sum_{a=1}^{A} K4_{RBset\_a}.$$

Here, K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, RBset_a denotes the a-th RB set of the A RB sets corresponding to the $N_{Tx,PSFCH}$ PSFCHs, $K4_{Reset\_a}$ denotes the number of PRBs included in the common interlace in the a-th RB set, and a is a positive integer, $1 \le a \le A$.

In some implementations, the number of PRBs in the common interlace(s) corresponding to the $N_{Tx,PSFCH}$ PSFCHs satisfies that:

$$K1 = A \cdot M_{RB}^{PSFCH}.$$

Here, K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, and $M_{RB}^{PSFCH}$ denotes the number of reference PRBs included in the one interlace in the one RB set.

In some implementations, the first PRB is a PRB in the common interlace, and the transmission power of the first PRB satisfies that:

$$P_{common} = N_{Tx,PSFCH} \cdot P_{one} \cdot \frac{k}{N_{Tx,PSFCH} \cdot K3 + k \cdot K1}.$$

Here, $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs included in the one PSFCH, and k is determined based on a ratio of the transmission power on the one PRB in the common interlace to the transmission power on the one dedicated PRB.

In some implementations, the first PRB is a PRB in the common interlace, and the transmission power of the first PRB satisfies that:

$$P_{common} = N_{Tx,PSFCH} \cdot P_{one} \cdot \frac{10^{k/10}}{N_{Tx,PSFCH} \cdot K3 + 10^{k/10} \cdot K1}.$$

Here, $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs included in the one PSFCH, and k is determined based on a difference between the transmission power on the one PRB in the common interlace and the transmission power on the one dedicated PRB.

In some implementations, the first PRB is a dedicated PRB, and the transmission power of the first PRB satisfies that:

$$P_{dedicated} = N_{Tx,PSFCH} \cdot P_{one} \cdot \frac{1}{N_{Tx,PSFCH} \cdot K3 + k \cdot K1} \cdot$$

Here, $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs included in the one PSFCH, and k is determined based on a ratio of the transmission power on the one PRB in the common interlace to the transmission power on the one dedicated PRB.

In some implementations, the first PRB is a dedicated PRB, and the transmission power of the first PRB satisfies that:

$$P_{dedicated} = N_{Tx,PSFCH} \cdot P_{one} \cdot \frac{1}{N_{Tx,PSFCH} \cdot K3 + 10^{k/10} \cdot K1} \cdot$$

Here, $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs included in the one PSFCH, and k is determined based on a difference between the transmission power on the one PRB in the common interlace and the transmission power on the one dedicated PRB.

In some implementations, the first PRB is a PRB in a first common interlace in one RB set, and the transmission power of the first PRB is a sum of transmission powers of target PSFCH(s), the target PSFCH(s) are PSFCH(s) whose transmission resources include the first common interlace.

In some implementations, the terminal device selects the $N_{Tx,PSFCH}$ PSFCHs based on one or more of: the transmission power of the single PSFCH; a first maximum transmission power; the number of PSFCHs to be transmitted by the terminal device; a priority corresponding to a PSFCH; or the number of dedicated PRBs included in transmission resources for one PSFCH. Here, the first maximum transmission power is determined based on a configured maximum output power.

In some implementations, the terminal device determines the transmission power of the one PSFCH based on one or more of: the $N_{Tx,PSFCH}$ PSFCH; the transmission power of the single PSFCH; a first maximum transmission power; the number of PSFCHs to be transmitted by the terminal device; a priority corresponding to a PSFCH; or the number of dedicated PRBs included in transmission resources for one PSFCH. Here, the first maximum transmission power is determined based on a configured maximum output power.

In some implementations, frequency domain resources of the first PSFCH include PRBs corresponding to a first interlace in a first RB set.

In some implementations, the transmission power of the first PSFCH is determined based on the number of reference PRBs included in one interlace.

In some implementations, the number of reference PRBs included in the one interlace is determined based on pre-configuration information and/or configuration information of a network device.

In some implementations, the transmission power of the first PSFCH is determined based on a transmission power of a single PSFCH, and the transmission power of the single PSFCH is determined based on the number of reference PRBs included in the one interlace.

In some implementations, the transmission power of the single PSFCH is further determined based on one or more of: a parameter for power control based on downlink pathloss; a downlink pathloss; or a parameter determined based on a subcarrier spacing.

In some implementations, the transmission power of the single PSFCH satisfies that:

$$P_{PSFCH,one} = P_{O,PSFCH} + 10 \log_{10}\left(2^{\mu} \cdot M_{RB}^{PSFCH}\right) + \alpha_{PSFCH} \cdot PL.$$

Here, $P_{PSFCH,one}$ denotes the transmission power of the single PSFCH, $P_{O,PSFCH}$ is a P0 value for the power control based on downlink pathloss, $M_{RB}^{PSFCH}$ denotes the number of reference PRBs included in the one interlace, PL is determined based on the downlink pathloss, $\alpha_{PSFCH}$ is an $\alpha$ value for the power control based on downlink pathloss, and $\mu$

denotes the parameter determined based on the subcarrier spacing.

In some implementations, the transmission power of the first PSFCH includes a transmission power of a first PRB for transmitting the first PSFCH.

In some implementations, the transmission power of the first PRB is determined based on one or more of: the transmission power of the single PSFCH; the number of $N_{Tx,PSFCH}$ PSFCHs selected by the terminal device; RB set(s) corresponding to the $N_{Tx,PSFCH}$ PSFCHs; interlace information corresponding to the $N_{Tx,PSFCH}$ PSFCHs; a transmission power of one PSFCH; the number of PRBs included in an interlace corresponding to each of the $N_{Tx,PSFCH}$ PSFCHs; or the number of reference PRBs included in the interlace corresponding to each of the $N_{Tx,PSFCH}$ PSFCHs.

In some implementations, the transmission power of the first PRB satisfies that:

$$N_{Tx,PSFCH} \cdot P_{one} \cdot \frac{1}{\sum_{j=1}^{N_{Tx,PSFCH}} K2_j}.$$

Here, $P_{one}$ denotes the transmission power of the one PSFCH, $K2_j$ denotes the number of PRBs included in transmission resources for the j-th PSFCH of the $N_{Tx,PSFCH}$ PSFCHs, j is a positive integer, and $1 \le j \le N_{Tx,PSFCH}$.

In some implementations, the terminal device selects the $N_{Tx,PSFCH}$ PSFCHs based on one or more of: the transmission power of the single PSFCH; a first maximum transmission power; the number of PSFCHs to be transmitted by the terminal device; a priority corresponding to a PSFCH; or the number of reference PRBs included in one interlace. Here, the first maximum transmission power is determined based on a configured maximum output power.

In some implementations, the terminal device determines the transmission power of the one PSFCH based on one or more of: the $N_{Tx,PSFCH}$ PSFCH; the transmission power of the single PSFCH; a first maximum transmission power; the number of PSFCHs to be transmitted by the terminal device; a priority corresponding to a PSFCH; or the number of reference PRBs included in one interlace. Here, the first maximum transmission power is determined based on a configured maximum output power.

In some implementations, the first PSFCH is one of $N_{Tx,PSFCH}$ PSFCHs selected by the terminal device, and the $N_{Tx,PSFCH}$ PSFCHs correspond to L1 RB sets. The terminal device 1400 further includes a communication module, configured to: perform a channel access procedure on the L1 RB sets; and transmit PSFCHs corresponding to P1 RB sets from among the $N_{Tx,PSFCH}$ PSFCHs. Here, the P1 RB sets are RB sets on which the channel access procedure is successful or a channel sensing result is idle among the L1 RB sets, L1 and P1 are both integers, and P1 is less than or equal to L1.

In some implementations, the first PSFCH is one of $N_{Tx,PSFCH}$ PSFCHs selected by the terminal device. The terminal device 1400 further includes a processing module, configured to: perform a channel access procedure on L2 RB sets, here, the L2 RB sets correspond to PSFCHs to be transmitted; and determine the $N_{Tx,PSFCH}$ PSFCHs from PSFCHs corresponding to P2 RB sets, here, the P2 RB sets are RB sets on which the channel access procedure is successful or a channel sensing result is idle among the L2 RB sets. Here, both L2 and P2 are integers, and P2 is less than or equal to L2.

FIG. 15 is a schematic structural diagram of an apparatus according to an embodiment of the present disclosure. The dashed line in FIG. 15 indicates that the unit or module is optional. The apparatus 1500 may be used to implement the methods described in the method embodiments described above. The apparatus 1500 may be a chip or a terminal device.

The apparatus 1500 may include one or more processors 1510. The processor 1510 may support the apparatus 1500 to implement the methods described in the above method embodiments. The processor 1510 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic devices, a discrete gate or transistor logic device, a discrete hardware component, or the like. The general purpose processor may be a microprocessor or the processor may be any conventional processor or the like.

The apparatus 1500 may also include one or more memories 1520. The memory 1520 stores a program that can be executed by the processor 1510 to cause the processor 1510 to perform the methods described in the above method embodiments. The memory 1520 may be independent of the processor 1510 or may be integrated in the processor 1510.

The apparatus 1500 may also include a transceiver 1530. The processor 1510 may communicate with other devices or chips through the transceiver 1530. For example, the processor 1510 may perform data transmission and/or reception with other devices or chips through the transceiver 1530.

The embodiments of the present disclosure also provide a computer-readable storage medium for storing a program. The computer-readable storage medium can be applied to the terminal device provided by the embodiments of the present disclosure, and the program causes a computer to execute the methods performed by the terminal device in the respective embodiments of the present disclosure.

The embodiments of the present disclosure also provide a computer program product. The computer program product includes a program. The computer program product can be applied to the terminal device provided by the embodiments of the present disclosure, and the program causes a computer to execute the methods performed by the terminal device in the respective embodiments of the present disclosure.

The embodiments of the present disclosure also provide a computer program. The computer program can be applied to the terminal device provided by the embodiments of the present disclosure, and the computer program causes a computer to execute the methods performed by the terminal device in the respective embodiments of the present disclosure.

It is to be understood that the terms "system" and "network" may be used interchangeably in the present disclosure. In addition, the terms used in the present disclosure are for explanation of the specific embodiments of the present disclosure only, and are not intended to limit the present disclosure. The terms "first", "second", "third", and "fourth" and the like in the specification and claims of the present disclosure and the accompanying drawings are used to distinguish different objects, and are not used to describe a specific order. Furthermore, the terms "comprising/including" and "having" and any variations thereof are intended to cover non-dedicated inclusions.

In the embodiments of the present disclosure, the "indication" mentioned may be a direct indication, or an indirect indication, or may represent an association relationship. For example, A indicates B, which may mean that A directly indicates B, e.g., B can be obtained through A; or may mean that A indirectly indicates B, e.g., A indicates C, and B can be obtained through C; or may mean that there is an association relationship between A and B.

In the embodiments of the present disclosure, "B corresponding to A" means that B is associated with A, and B can be determined based on A. However, it should also be understood that "B can be determined based on A" does not mean that B is determined only based on A, but that B may also be determined based on A and/or other information.

In the embodiments of the present disclosure, the term "correspondence/corresponding" may indicate that there is a direct correspondence or indirect correspondence between the two objects, or may indicate that there is an association relationship between the two objects, or may be a relationship between indicating and being indicated, configuring and being configured, or the like.

In the embodiments of the present disclosure, "predefined/predefinition" or "preconfigured/pre-configuration" may be realized by pre-storing corresponding codes, tables, or other manners that can be used to indicate relevant information in devices (including, for example, terminal devices and network devices). The present disclosure does not limit specific implementation manners thereof. For example, "predefined/predefinition" may refer to being defined in a protocol.

In the embodiments of the present disclosure, the "protocol" may refer to a standard protocol in the field of communications, and may include, for example, an LTE protocol, an NR protocol, and related protocols applied to future communication systems. This is not limited in the present disclosure.

The term "and/or" in the embodiments of the present disclosure merely describes an association relationship between associated objects, and indicates that there may be three kinds of relationships. For example, A and/or B may indicate that A exists alone, A and B exist simultaneously, and B exists alone. In addition, the character "/" herein generally indicates that the related objects before and after the character are in an "or" relationship.

In various embodiments of the present disclosure, the size of the sequence numbers of the above-described processes does not mean the sequence of execution, and the sequence of execution of each process should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other ways. For example, the device embodiments described above are merely schematic, for example, the division of units is only a logical function division, and there may be other division methods in actual implementation, for example, multiple units or components may be combined or integrated into another system, or some features may be ignored or not executed. In addition, the shown or discussed coupling or direct coupling or communication connection between each other may be indirect coupling or communication connection through some interfaces, devices or units, which may be electrical, mechanical or of other forms.

The units described as separate components may or may not be physically separate, and the components displayed as units may or may not be physical units, that is, they may be located in one place or may be distributed over multiple network units. Part or all of the units may be selected according to actual needs to achieve the purpose of the solutions of the embodiments.

In addition, various functional units in the embodiments of the present disclosure may be integrated in one processing unit, or each unit may be physically present alone, or two or more units may be integrated in one unit.

The embodiments described above may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable devices. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center by wired means (e.g., coaxial cable, optical fiber, digital subscriber line (DSL)) or wireless means (e.g., infrared, wireless, microwave) means. The computer-readable storage medium may be any available medium that can be read by a computer or a data storage device such as a server or a data center integrating one or more available media. The available media may be magnetic media (e.g., floppy disk, hard disk, magnetic tape), optical media (e.g., digital video disc (DVD)), or semiconductor media (e.g., solid state disk (SSD)), or the like.

The above is merely specific implementations of the present disclosure, but the scope of protection of the present disclosure is not limited thereto. Any changes or substitutions conceived by a person skilled in the art within the technical scope disclosed in the present disclosure should be covered within the scope of protection of the present disclosure. Therefore, the scope of protection of the present disclosure should be subject to the scope of protection of the claims.

**Claims**

1. A method for determining a transmission power, comprising:
determining, by a terminal device, a transmission power of a first physical sidelink feedback channel (PSFCH), the first PSFCH being an interlace-based PSFCH.

2. The method of claim 1, wherein frequency domain resources of the first PSFCH comprise a common interlace and dedicated physical resource block(s) (PRBs) in one resource block (RB) set.

3. The method of claim 2, wherein the transmission power of the first PSFCH is determined based on a number of dedicated PRBs comprised in one PSFCH.

4. The method of claim 3, wherein the transmission power of the first PSFCH is determined based on a transmission power of a single PSFCH, the transmission power of the single PSFCH being determined based on the number of dedicated PRBs comprised in the one PSFCH.

5. The method of claim 4, wherein the transmission power of the single PSFCH is further determined based on one or more of:

   a parameter for power control based on downlink pathloss;
   a downlink pathloss; or
   a parameter determined based on a subcarrier spacing.

6. The method of claim 5, wherein the transmission power of the single PSFCH satisfies:

$$P_{PSFCH,one} = P_{O,PSFCH} + 10\log_{10}(2^\mu \cdot K3) + \alpha_{PSFCH} \cdot PL;$$

wherein $P_{PSFCH,one}$ denotes the transmission power of the single PSFCH, $P_{O,PSFCH}$ is a P0 value for the power control based on downlink pathloss, K3 is determined based on the number of dedicated PRBs comprised in the one PSFCH, PL is determined based on the downlink pathloss, $\alpha_{PSFCH}$ is an $\alpha$ value for the power control based on downlink pathloss, and $\mu$ denotes the parameter determined based on the subcarrier spacing.

7. The method of any one of claims 2 to 6, wherein the transmission power of the first PSFCH comprises a transmission power of a first PRB for transmitting the first PSFCH.

8. The method of claim 7, wherein the transmission power of the first PRB is determined based on one or more of:

   the transmission power of the single PSFCH;
   a number of $N_{Tx,PSFCH}$ PSFCHs selected by the terminal device;
   a transmission power of one PSFCH;
   a number of dedicated PRBs comprised in one PSFCH;
   a number of PRBs in common interlace(s) corresponding to the $N_{Tx,PSFCH}$ PSFCHs;
   an association relationship between a transmission power on one PRB in the common interlace and a transmission power on one dedicated PRB; or
a minimum value of the transmission power on the one PRB.

9. The method of claim 8, wherein the association relationship comprises one of:

a difference between the transmission power on the one PRB in the common interlace and the transmission power on the one dedicated PRB; or
a ratio of the transmission power on the one PRB in the common interlace to the transmission power on the one dedicated PRB.

10. The method of claim 8 or 9, wherein the association relationship is determined based on pre-configuration information and/or configuration information of a network device.

11. The method of claim 10, wherein the pre-configuration information and/or the configuration information of the network device include first indication information for indicating the association relationship.

12. The method of any one of claims 8 to 11, wherein the number of PRBs in the common interlace(s) corresponding to the $N_{Tx,PSFCH}$ PSFCHs is determined based on one or more of:

a number of RB sets corresponding to the $N_{Tx,PSFCH}$ PSFCHs;
RB set(s) corresponding to the $N_{Tx,PSFCH}$ PSFCHs;
index information of the common interlace(s);
a number of PRBs comprised in a common interlace in one RB set; or
a number of reference PRBs comprised in one interlace in one RB set.

13. The method of claim 12, wherein the index information of the common interlace(s) is determined based on pre-configuration information and/or configuration information of a network device.

14. The method of claim 12 or 13, wherein the number of PRBs comprised in the common interlace in the one RB set is determined based on pre-configuration information and/or configuration information of a network device.

15. The method of any one of claims 12 to 14, wherein the number of reference PRBs comprised in the one interlace in the one RB set is determined based on one or more of:

pre-configuration information;
configuration information of a network device;
index information corresponding to the one RB set;
index information corresponding to the common interlace in the one RB set; or
configuration information of an intra-cell guard band.

16. The method of any one of claims 12 to 15, wherein the number of PRBs in the common interlace(s) corresponding to the $N_{Tx,PSFCH}$ PSFCHs satisfies:

$$K1 = \sum_{a=1}^{A} K4_{RBset\_a};$$

wherein K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, RBset_a denotes an a-th RB set of the A RB sets corresponding to the $N_{Tx,PSFCH}$ PSFCHs, $K4_{RBset\_a}$ denotes the number of PRBs comprised in the common interlace in the a-th RB set, and a is a positive integer, $1 \leq a \leq A$.

17. The method of any one of claims 12 to 15, wherein the number of PRBs in the common interlace(s) corresponding to the $N_{Tx,PSFCH}$ PSFCHs satisfies:

$$K1 = A \cdot M_{RB}^{PSFCH};$$

wherein K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, and $M_{RB}^{PSFCH}$ denotes the number of reference PRBs comprised in the one interlace in the one RB set.

**18.** The method of any one of claims 8 to 17, wherein the first PRB is a PRB in the common interlace, and the transmission power of the first PRB satisfies:

$$P_{common} = N_{Tx,PSFCH} \cdot P_{one} \cdot \frac{k}{N_{Tx,PSFCH} \cdot K3 + k \cdot K1};$$

wherein $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a ratio of the transmission power on the one PRB in the common interlace to the transmission power on the one dedicated PRB.

**19.** The method of any one of claims 8 to 17, wherein the first PRB is a PRB in the common interlace, and the transmission power of the first PRB satisfies:

$$P_{common} = N_{Tx,PSFCH} \cdot P_{one} \cdot \frac{10^{k/10}}{N_{Tx,PSFCH} \cdot K3 + 10^{k/10} \cdot K1};$$

wherein $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a difference between the transmission power on the one PRB in the common interlace and the transmission power on the one dedicated PRB.

**20.** The method of any one of claims 8 to 17, wherein the first PRB is a dedicated PRB, and the transmission power of the first PRB satisfies:

$$P_{dedicated} = N_{Tx,PSFCH} \cdot P_{one} \cdot \frac{1}{N_{Tx,PSFCH} \cdot K3 + k \cdot K1};$$

wherein $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a ratio of the transmission power on the one PRB in the common interlace to the transmission power on the one dedicated PRB.

**21.** The method of any one of claims 8 to 17, wherein the first PRB is a dedicated PRB, and the transmission power of the first PRB satisfies:

$$P_{dedicated} = N_{Tx,PSFCH} \cdot P_{one} \cdot \frac{1}{N_{Tx,PSFCH} \cdot K3 + 10^{k/10} \cdot K1};$$

wherein $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a difference between the transmission power on the one PRB in the common interlace and the transmission power on the one dedicated PRB.

**22.** The method of any one of claims 8 to 17, wherein the first PRB is a PRB in a first common interlace in one RB set, and the transmission power of the first PRB is a sum of transmission powers of target PSFCH(s), the target PSFCH(s) are PSFCH(s) whose transmission resources comprise the first common interlace.

**23.** The method of any one of claims 8 to 22, wherein the terminal device selects the $N_{Tx,PSFCH}$ PSFCHs based on one or more of:

the transmission power of the single PSFCH;
a first maximum transmission power;
a number of PSFCHs to be transmitted by the terminal device;
a priority corresponding to a PSFCH; or
a number of dedicated PRBs comprised in transmission resources for one PSFCH;
wherein the first maximum transmission power is determined based on a configured maximum output power.

24. The method of any one of claims 8 to 23, wherein the terminal device determines the transmission power of the one PSFCH based on one or more of:

the $N_{Tx,PSFCH}$ PSFCH;
the transmission power of the single PSFCH;
a first maximum transmission power;
a number of PSFCHs to be transmitted by the terminal device;
a priority corresponding to a PSFCH; or
a number of dedicated PRBs comprised in transmission resources for one PSFCH;
wherein the first maximum transmission power is determined based on a configured maximum output power.

25. The method of claim 1, wherein frequency domain resources of the first PSFCH comprise physical resource blocks (PRBs) corresponding to a first interlace in a first resource block (RB) set.

26. The method of claim 25, wherein the transmission power of the first PSFCH is determined based on a number of reference PRBs comprised in one interlace.

27. The method of claim 26, wherein the number of reference PRBs comprised in the one interlace is determined based on pre-configuration information and/or configuration information of a network device.

28. The method of claim 26 or 27, wherein the transmission power of the first PSFCH is determined based on a transmission power of a single PSFCH, the transmission power of the single PSFCH being determined based on the number of reference PRBs comprised in the one interlace.

29. The method of claim 28, wherein the transmission power of the single PSFCH is further determined based on one or more of:

a parameter for power control based on downlink pathloss;
a downlink pathloss; or
a parameter determined based on a subcarrier spacing.

30. The method of claim 29, wherein the transmission power of the single PSFCH satisfies:

$$P_{PSFCH,one} = P_{O,PSFCH} + 10\log_{10}\left(2^{\mu} \cdot M_{RB}^{PSFCH}\right) + \alpha_{PSFCH} \cdot PL;$$

wherein $P_{PSFCH,one}$ denotes the transmission power of the single PSFCH, $P_{O,PSFCH}$ is a P0 value for the power control based on downlink pathloss, $M_{RB}^{PSFCH}$ denotes the number of reference PRBs comprised in the one interlace, PL is determined based on the downlink pathloss, $\alpha_{PSFCH}$ is an $\alpha$ value for the power control based on downlink pathloss, and $\mu$ denotes the parameter determined based on the subcarrier spacing.

31. The method of any one of claims 25 to 30, wherein the transmission power of the first PSFCH comprises a transmission power of a first PRB for transmitting the first PSFCH.

32. The method of claim 31, wherein the transmission power of the first PRB is determined based on one or more of:

the transmission power of the single PSFCH;
a number of $N_{Tx,PSFCH}$ PSFCHs selected by the terminal device;
RB set(s) corresponding to the $N_{Tx,PSFCH}$ PSFCHs;
interlace information corresponding to the $N_{Tx,PSFCH}$ PSFCHs;

a transmission power of one PSFCH;
a number of PRBs comprised in an interlace corresponding to each of the $N_{Tx,PSFCH}$ PSFCHs; or
a number of reference PRBs comprised in the interlace corresponding to each of the $N_{Tx,PSFCH}$ PSFCHs.

33. The method of claim 32, wherein the transmission power of the first PRB satisfies:

$$N_{Tx,PSFCH} \cdot P_{one} \cdot \frac{1}{\sum_{j=1}^{N_{Tx,PSFCH}} K2_j};$$

wherein $P_{one}$ denotes the transmission power of the one PSFCH, $K2_j$ denotes the number of PRBs comprised in transmission resources for a j-th PSFCH of the $N_{Tx,PSFCH}$ PSFCHs, j is a positive integer, and $1 \le j \le N_{TX,PSFCH}$.

34. The method of claim 32 or 33, wherein the terminal device selects the $N_{Tx,PSFCH}$ PSFCHs based on one or more of:

the transmission power of the single PSFCH;
a first maximum transmission power;
a number of PSFCHs to be transmitted by the terminal device;
a priority corresponding to a PSFCH; or
a number of reference PRBs comprised in one interlace;
wherein the first maximum transmission power is determined based on a configured maximum output power.

35. The method of any one of claims 32 to 34, wherein the terminal device determines the transmission power of the one PSFCH based on one or more of:

the $N_{Tx,PSFCH}$ PSFCH;
the transmission power of the single PSFCH;
a first maximum transmission power;
a number of PSFCHs to be transmitted by the terminal device;
a priority corresponding to a PSFCH; or
a number of reference PRBs comprised in one interlace;
wherein the first maximum transmission power is determined based on a configured maximum output power.

36. The method of any one of claims 1 to 35, wherein the first PSFCH is one of $N_{Tx,PSFCH}$ PSFCHs selected by the terminal device, the $N_{Tx,PSFCH}$ PSFCHs corresponding to L1 resource block (RB) sets, and
the method further comprises:

performing, by the terminal device, a channel access procedure on the L1 RB sets; and
transmitting, by the terminal device, PSFCHs corresponding to P1 RB sets from among the $N_{Tx,PSFCH}$ PSFCHs;
wherein the P1 RB sets are RB sets on which the channel access procedure is successful or a channel sensing result is idle among the L1 RB sets, L1 and P1 are both integers, and P1 is less than or equal to L1.

37. The method of any one of claims 1 to 35, wherein the first PSFCH is one of $N_{Tx,PSFCH}$ PSFCHs selected by the terminal device, and
the method further comprises:

performing, by the terminal device, a channel access procedure on L2 resource block (RB) sets, the L2 RB sets corresponding to PSFCHs to be transmitted; and
determining, by the terminal device, the $N_{Tx,PSFCH}$ PSFCHs from PSFCHs corresponding to P2 RB sets, the P2 RB sets being RB sets on which the channel access procedure is successful or a channel sensing result is idle among the L2 RB sets;
wherein L2 and P2 are both integers, and P2 is less than or equal to L2.

38. A terminal device, comprising:
a determination module, configured to determine a transmission power of a first physical sidelink feedback channel (PSFCH), the first PSFCH being an interlace-based PSFCH.

39. The terminal device of claim 38, wherein frequency domain resources of the first PSFCH comprise a common interlace and dedicated physical resource block(s) (PRBs) in one resource block (RB) set.

40. The terminal device of claim 39, wherein the transmission power of the first PSFCH is determined based on a number of dedicated PRBs comprised in one PSFCH.

41. The terminal device of claim 40, wherein the transmission power of the first PSFCH is determined based on a transmission power of a single PSFCH, the transmission power of the single PSFCH being determined based on the number of dedicated PRBs comprised in the one PSFCH.

42. The terminal device of claim 41, wherein the transmission power of the single PSFCH is further determined based on one or more of:

   a parameter for power control based on downlink pathloss;
   a downlink pathloss; or
   a parameter determined based on a subcarrier spacing.

43. The terminal device of claim 42, wherein the transmission power of the single PSFCH satisfies:

$$P_{PSFCH,one} = P_{O,PSFCH} + 10\log_{10}(2^{\mu} \cdot K3) + \alpha_{PSFCH} \cdot PL;$$

wherein $P_{PSFCH,one}$ denotes the transmission power of the single PSFCH, $P_{O,PSFCH}$ is a P0 value for the power control based on downlink pathloss, K3 is determined based on the number of dedicated PRBs comprised in the one PSFCH, PL is determined based on the downlink pathloss, $\alpha_{PSFCH}$ is an $\alpha$ value for the power control based on downlink pathloss, and $\mu$ denotes the parameter determined based on the subcarrier spacing.

44. The terminal device according to any one of claims 39 to 43, wherein the transmission power of the first PSFCH comprises a transmission power of a first PRB for transmitting the first PSFCH.

45. The terminal device of claim 44, wherein the transmission power of the first PRB is determined based on one or more of:

   the transmission power of the single PSFCH;
   a number of $N_{Tx,PSFCH}$ PSFCHs selected by the terminal device;
   a transmission power of one PSFCH;
   a number of dedicated PRBs comprised in one PSFCH;
   a number of PRBs in common interlace(s) corresponding to the $N_{Tx,PSFCH}$ PSFCHs;
   an association relationship between a transmission power on one PRB in the common interlace and a transmission power on one dedicated PRB; or
   a minimum value of the transmission power on the one PRB.

46. The terminal device of claim 45, wherein the association relationship comprises one of:

   a difference between the transmission power on the one PRB in the common interlace and the transmission power on the one dedicated PRB; or
   a ratio of the transmission power on the one PRB in the common interlace to the transmission power on the one dedicated PRB.

47. The terminal device of claim 45 or 46, wherein the association relationship is determined based on pre-configuration information and/or configuration information of a network device.

48. The terminal device of claim 47, wherein the pre-configuration information and/or the configuration information of the network device comprise first indication information for indicating the association relationship.

49. The terminal device of any one of claims 45 to 48, wherein the number of PRBs in the common interlace(s) corresponding to the $N_{Tx,PSFCH}$ PSFCHs is determined based on one or more of:

   a number of RB sets corresponding to the $N_{Tx,PSFCH}$ PSFCHs;

RB set(s) corresponding to the $N_{Tx,PSFCH}$ PSFCHs;
index information of the common interlace(s);
a number of PRBs comprised in a common interlace in one RB set; or
a number of reference PRBs comprised in one interlace in one RB set.

50. The terminal device of claim 49, wherein the index information of the common interlace(s) is determined based on pre-configuration information and/or configuration information of a network device.

51. The terminal device of claim 49 or 50, wherein the number of PRBs comprised in the common interlace in the one RB set is determined based on pre-configuration information and/or configuration information of a network device.

52. The terminal device according to any one of claims 49 to 51, wherein the number of reference PRBs comprised in the one interlace in the one RB set is determined based on one or more of:

pre-configuration information;
configuration information of a network device;
index information corresponding to the one RB set;
index information corresponding to the common interlace in the one RB set; or
configuration information of an intra-cell guard band.

53. The terminal device according to any one of claims 49 to 52, wherein the number of PRBs in the common interlace(s) corresponding to the $N_{Tx,PSFCH}$ PSFCHs satisfies:

$$K1 = \sum_{a=1}^{A} K4_{RBset\_a};$$

wherein K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, RBset_a denotes an a-th RB set of the A RB sets corresponding to the $N_{Tx,PSFCH}$ PSFCHs, $K4_{RBset\_a}$ denotes the number of PRBs comprised in the common interlace in the a-th RB set, and a is a positive integer, $1 \le a \le A$.

54. The terminal device according to any one of claims 49 to 52, wherein the number of PRBs in the common interlace(s) corresponding to the $N_{Tx,PSFCH}$ PSFCHs satisfies:

$$K1 = A \cdot M_{RB}^{PSFCH};$$

wherein K1 denotes the number of PRBs in the common interlace(s) corresponding to the $N_{Tx,PSFCH}$ PSFCHs, A denotes the number of RB sets corresponding to the $N_{Tx,PSFCH}$ PSFCHs, and $M_{RB}^{PSFCH}$ denotes the number of reference PRBs comprised in the one interlace in the one RB set.

55. The terminal device according to any one of claims 45 to 54, wherein the first PRB is a PRB in the common interlace, and the transmission power of the first PRB satisfies:

$$P_{common} = N_{Tx,PSFCH} \cdot P_{one} \cdot \frac{k}{N_{Tx,PSFCH} \cdot K3 + k \cdot K1};$$

wherein $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a ratio of the transmission power on the one PRB in the common interlace to the transmission power on the one dedicated PRB.

56. The terminal device according to any one of claims 45 to 54, wherein the first PRB is a PRB in the common interlace, and the transmission power of the first PRB satisfies:

$$P_{common} = N_{Tx,PSFCH} \cdot P_{one} \cdot \frac{10^{k/10}}{N_{Tx,PSFCH} \cdot K3 + 10^{k/10} \cdot K1};$$

wherein $P_{common}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a difference between the transmission power on the one PRB in the common interlace and the transmission power on the one dedicated PRB.

57. The terminal device according to any one of claims 45 to 54, wherein the first PRB is a dedicated PRB, and the transmission power of the first PRB satisfies:

$$P_{dedicated} = N_{Tx,PSFCH} \cdot P_{one} \cdot \frac{1}{N_{Tx,PSFCH} \cdot K3 + k \cdot K1};$$

wherein $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a ratio of the transmission power on the one PRB in the common interlace to the transmission power on the one dedicated PRB.

58. The terminal device according to any one of claims 45 to 54, wherein the first PRB is a dedicated PRB, and the transmission power of the first PRB satisfies:

$$P_{dedicated} = N_{Tx,PSFCH} \cdot P_{one} \cdot \frac{1}{N_{Tx,PSFCH} \cdot K3 + 10^{k/10} \cdot K1};$$

wherein $P_{dedicated}$ denotes the transmission power of the first PRB, $P_{one}$ denotes the transmission power of the one PSFCH, K1 denotes the number of PRBs in the common interlace(s) corresponding to the $N_{Tx,PSFCH}$ PSFCHs, K3 denotes the number of dedicated PRBs comprised in the one PSFCH, and k is determined based on a difference between the transmission power on the one PRB in the common interlace and the transmission power on the one dedicated PRB.

59. The terminal device according to any one of claims 45 to 54, wherein the first PRB is a PRB in a first common interlace in one RB set, and the transmission power of the first PRB is a sum of transmission powers of target PSFCH(s), the target PSFCH(s) are PSFCH(s) whose transmission resources comprise the first common interlace.

60. The terminal device according to any one of claims 45 to 59, wherein the terminal device selects the $N_{Tx,PSFCH}$ PSFCHs based on one or more of:

the transmission power of the single PSFCH;
a first maximum transmission power;
a number of PSFCHs to be transmitted by the terminal device;
a priority corresponding to a PSFCH; or
a number of dedicated PRBs comprised in transmission resources for one PSFCH;
wherein the first maximum transmission power is determined based on a configured maximum output power.

61. The terminal device according to any one of claims 45 to 60, wherein the terminal device determines the transmission power of the one PSFCH based on one or more of:

the $N_{Tx,PSFCH}$ PSFCH;
the transmission power of the single PSFCH;
a first maximum transmission power;
a number of PSFCHs to be transmitted by the terminal device;
a priority corresponding to a PSFCH; or
a number of dedicated PRBs comprised in transmission resources for one PSFCH;
wherein the first maximum transmission power is determined based on a configured maximum output power.

**62.** The terminal device of claim 38, wherein frequency domain resources of the first PSFCH include physical resource blocks (PRBs) corresponding to a first interlace in a first resource block (RB) set.

**63.** The terminal device of claim 62, wherein the transmission power of the first PSFCH is determined based on a number of reference PRBs comprised in one interlace.

**64.** The terminal device of claim 63, wherein the number of reference PRBs comprised in the one interlace is determined based on pre-configuration information and/or configuration information of a network device.

**65.** The terminal device of claim 63 or 64, wherein the transmission power of the first PSFCH is determined based on a transmission power of a single PSFCH, the transmission power of the single PSFCH being determined based on the number of reference PRBs comprised in the one interlace.

**66.** The terminal device of claim 65, wherein the transmission power of the single PSFCH is further determined based on one or more of:

a parameter for power control based on downlink pathloss;
a downlink pathloss; or
a parameter determined based on a subcarrier spacing.

**67.** The terminal device of claim 66, wherein the transmission power of the single PSFCH satisfies:

$$P_{PSFCH,one} = P_{O,PSFCH} + 10\log_{10}\left(2^{\mu} \cdot M_{RB}^{PSFCH}\right) + \alpha_{PSFCH} \cdot PL;$$

wherein $P_{PSFCH,one}$ denotes the transmission power of the single PSFCH, $P_{O,PSFCH}$ is a P0 value for the power control based on downlink pathloss, $M_{RB}^{PSFCH}$ denotes the number of reference PRBs comprised in the one interlace, PL is determined based on the downlink pathloss, $\alpha_{PSFCH}$ is an $\alpha$ value for the power control based on downlink pathloss, and $\mu$ denotes the parameter determined based on the subcarrier spacing.

**68.** The terminal device according to any one of claims 62 to 67, wherein the transmission power of the first PSFCH comprises a transmission power of a first PRB for transmitting the first PSFCH.

**69.** The terminal device of claim 68, wherein the transmission power of the first PRB is determined based on one or more of:

the transmission power of the single PSFCH;
a number of $N_{Tx,PSFCH}$ PSFCHs selected by the terminal device;
RB set(s) corresponding to the $N_{Tx,PSFCH}$ PSFCHs;
interlace information corresponding to the $N_{Tx,PSFCH}$ PSFCHs;
a transmission power of one PSFCH;
a number of PRBs comprised in an interlace corresponding to each of the $N_{Tx,PSFCH}$ PSFCHs; or
a number of reference PRBs comprised in the interlace corresponding to each of the $N_{Tx,PSFCH}$ PSFCHs.

**70.** The terminal device of claim 69, wherein the transmission power of the first PRB satisfies:

$$N_{Tx,PSFCH} \cdot P_{one} \cdot \frac{1}{\sum_{j=1}^{N_{Tx,PSFCH}} K2_j};$$

wherein $P_{one}$ denotes the transmission power of the one PSFCH, $K2_j$ denotes the number of PRBs comprised in transmission resources for a j-th PSFCH of the $N_{Tx,PSFCH}$ PSFCHs, j is a positive integer, and $1 \leq j \leq N_{Tx,PSFCH}$.

**71.** The terminal device of claim 69 or 70, wherein the terminal device selects the $N_{Tx,PSFCH}$ PSFCHs based on one or more of:

the transmission power of the single PSFCH;

a first maximum transmission power;
a number of PSFCHs to be transmitted by the terminal device;
a priority corresponding to a PSFCH; or
a number of reference PRBs comprised in one interlace;
wherein the first maximum transmission power is determined based on a configured maximum output power.

72. The terminal device according to any one of claims 69 to 71, wherein the terminal device determines the transmission power of the one PSFCH based on one or more of:

the $N_{Tx,PSFCH}$ PSFCH;
the transmission power of the single PSFCH;
a first maximum transmission power;
a number of PSFCHs to be transmitted by the terminal device;
a priority corresponding to a PSFCH; or
a number of reference PRBs comprised in one interlace;
wherein the first maximum transmission power is determined based on a configured maximum output power.

73. The terminal device according to any one of claims 38 to 72, wherein the first PSFCH is one of $N_{Tx,PSFCH}$ PSFCHs selected by the terminal device, the $N_{Tx,PSFCH}$ PSFCHs corresponding to L1 resource block (RB) sets, and the terminal device further comprises:

a communication module, configured to: perform a channel access procedure on the L1 RB sets; and transmit PSFCHs corresponding to P1 RB sets from among the $N_{Tx,PSFCH}$ PSFCHs;
wherein the P1 RB sets are RB sets on which the channel access procedure is successful or a channel sensing result is idle among the L1 RB sets, L1 and P1 are both integers, and P1 is less than or equal to L1.

74. The terminal device according to any one of claims 38 to 72, wherein the first PSFCH is one of $N_{Tx,PSFCH}$ PSFCHs selected by the terminal device, and the terminal device further comprises:

a processing module, configured to: perform a channel access procedure on L2 resource block (RB) sets, the L2 RB sets corresponding to PSFCHs to be transmitted; and determine the $N_{Tx,PSFCH}$ PSFCHs from PSFCHs corresponding to P2 RB sets, the P2 RB sets being RB sets on which the channel access procedure is successful or a channel sensing result is idle among the L2 RB sets;
wherein L2 and P2 are both integers, and P2 is less than or equal to L2.

75. A terminal device, comprising: a transceiver, a memory and a processor, wherein the memory is configured to store a program, and the processor is configured to invoke the program in the memory and control the transceiver to receive or transmit signals to cause the terminal device to perform the method of any one of claims 1 to 37.

76. An apparatus, comprising a processor for invoking a program from a memory to cause the apparatus to perform the method of any one of claims 1 to 37.

77. A chip, comprising a processor for calling a program from a memory to cause a device equipped with the chip to perform the method of any one of claims 1 to 37.

78. A computer-readable storage medium having stored thereon a program that causes a computer to perform the method of any one of claims 1 to 37.

79. A computer program product comprising a program that causes a computer to perform the method of any one of claims 1 to 37.

80. A computer program for causing a computer to perform the method of any one of claims 1 to 37.

**FIG. 1**

**FIG. 2**

110

120a

120b

←─SL communication─→

**FIG. 3**

120b

120b

←─SL communication─→

**FIG. 4**

**Communication group**

Terminal
device 1

Resource
allocation

Resource
allocation

Terminal
device 2

Terminal
device 3

SL
communication

**FIG. 5**

Terminal
device 2

Terminal
device 6

**Terminal
device 1**

Terminal
device 3

Terminal
device 5

Terminal
device 4

**FIG. 6**

Terminal
device 1

Terminal
device 2

SL data

**FIG. 7**

Communication group

Terminal
device 2

Terminal
device 1

Terminal
device 3

Terminal
device 4

**FIG. 8**

| A G C | | | | | PSSCH | | | | | | | | GP |
|---|---|---|---|---|---|---|---|---|---|---|---|---|---|

PSCCH

**FIG. 9A**

| A G C | | | | | PSSCH | | | | | GP | PSFCH | GP |
|---|---|---|---|---|---|---|---|---|---|---|---|---|

PSCCH

**FIG. 9B**

Channel occupancy time

Successful LBT

Time domain

## FIG. 10

GB0 starting point

GB1 starting point

GB2 starting point

RB set 0    RB set 1    RB set 2    RB set 3

RB

Common RB benchmark

GB0 length    GB1 length    GB2 length

SL BWP starting point    SL BWP ending point

Resource pool starting point

Resource pool ending point

Frequency domain

## FIG. 11

**FIG. 12A**

EP 4 709 000 A1

FIG. 12B

EP 4 709 000 A1

FIG. 12C

The terminal device determines the transmission power of the first PSFCH ~1310

**FIG. 13**

Terminal device 1400

Determination module 1410

**FIG. 14**

Apparatus 1500

Processor 1510

Memory 1520

Transceiver 1530

**FIG. 15**

## INTERNATIONAL SEARCH REPORT

| | |
|---|---|
| International application No. | |
| **PCT/CN2023/127650** | |

**A. CLASSIFICATION OF SUBJECT MATTER**

H04W72/0453(2023.01)i; H04W28/02(2009.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXTC; CNKI; IEEE; 3GPP: 隔行, 功率, 交错, 交织, 设备, 梳, 梳齿, 终端, 逐行, Comb, interlace, Power, PSFCH, UE, SL-U, determin+, terminal+

**C. DOCUMENTS CONSIDERED TO BE RELEVANT**

| Category* | Citation of document, with indication, where appropriate, of the relevant passages | Relevant to claim No. |
|---|---|---|
| X | CN 115915261 A (ZTE CORP.) 04 April 2023 (2023-04-04)<br>description, paragraphs [0006]-[0267], and figures 1-4 | 1-80 |
| A | CN 115802492 A (SPREADTRUM COMMUNICATIONS (SHANGHAI) CO., LTD.) 14 March 2023 (2023-03-14)<br>entire document | 1-80 |
| A | US 2020022089 A1 (SAMSUNG ELECTRONICS CO., LTD.) 16 January 2020 (2020-01-16)<br>entire document | 1-80 |
| A | WO 2023133834 A1 (GUANGDONG OPPO MOBILE TELECOMMUNICATIONS CORP., LTD.) 20 July 2023 (2023-07-20)<br>entire document | 1-80 |
| A | VIVO. "Discussion on PSFCII configured power with multiple resource pools"<br>*3GPP TSG RAN WG1 #112. R1-2300410.* 17 February 2023 (2023-02-17),<br>entire document | 1-80 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2023** | **11 December 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/127650** |

**C.    DOCUMENTS CONSIDERED TO BE RELEVANT**

| Category* | Citation of document, with indication, where appropriate, of the relevant passages | Relevant to claim No. |
| --- | --- | --- |
| A | LG ELECTRONICS. "Discussion on physical channel design framework for sidelink on unlicensed spectrum" *3GPP TSG RAN WG1 #112, R1-2301533*, 17 February 2023 (2023-02-17), entire document | 1-80 |

Form PCT/ISA/210 (second sheet) (July 2022)

**INTERNATIONAL SEARCH REPORT**
Information on patent family members

| International application No. |
| --- |
| **PCT/CN2023/127650** |

| Patent document cited in search report | | | Publication date (day/month/year) | Patent family member(s) | | | Publication date (day/month/year) |
| --- | --- | --- | --- | --- | --- | --- | --- |
| CN | 115915261 | A | 04 April 2023 | None | | | |
| CN | 115802492 | A | 14 March 2023 | None | | | |
| US | 2020022089 | A1 | 16 January 2020 | EP | 4178277 | A1 | 10 May 2023 |
| | | | | US | 2021092688 | A1 | 25 March 2021 |
| | | | | US | 11343777 | B2 | 24 May 2022 |
| | | | | WO | 2020013641 | A1 | 16 January 2020 |
| | | | | US | 10863447 | B2 | 08 December 2020 |
| | | | | EP | 3804418 | A1 | 14 April 2021 |
| | | | | EP | 3804418 | A4 | 11 August 2021 |
| | | | | US | 2022295419 | A1 | 15 September 2022 |
| WO | 2023133834 | A1 | 20 July 2023 | None | | | |

Form PCT/ISA/210 (patent family annex) (July 2022)